# EUROPEAN PATENT SPECIFICATION

(11) **EP 3 266 623 B1**
(45) Date of publication and mention of the grant of the patent: **09.02.2022**
(21) Application number: 16761686.1
(22) Date of filing: 04.03.2016
(51) Int. Cl.: B29D 30/08, B29D 30/66, B29D 30/00, B29C 65/48, B29L 30/00

(54) **TIRE**
REIFEN
PNEUMATIQUE

(30) Priority: 06.03.2015 JP 2015045037
(43) Date of publication of application: 10.01.2018
(73) Proprietor: Bridgestone Corporation, Tokyo 104-8340 (JP)
(72) Inventor: FUKUSHIMA, Atsushi, Tokyo 104-8340 (JP); SONE, Naoyuki, Tokyo 104-8340 (JP); SUZUKI, Takahiro, Tokyo 104-8340 (JP); GIZA, Emil, Tokyo 104-8340 (JP)
(74) Representative: Oxley, Robin John George
(86) International application number: PCT/JP2016/056891
(87) International publication number: WO 2016/143716

(56) References cited:
- EP-A1- 2 762 330
- EP-A1- 3 034 577
- EP-A2- 2 452 832
- EP-A2- 2 665 771
- EP-A2- 2 727 721
- WO-A1-2014/147981
- JP-A- H0 284 310
- JP-A- H09 165 469
- JP-A- H09 314 589
- JP-A- 2011 079 240
- JP-A- 2013 087 221
- JP-A- 2013 180 454
- JP-A- 2015 000 600
- JP-B2- 3 692 370

## Description

### Technical Field

The present invention relates to a tire.

### Background Art

Conventional tires are composed of, for example, rubber, an organic fiber material, and a steel member, and improvements in heat resistance and the like have been attempted. On the other hand, a tire using a thermoplastic resin, a thermoplastic elastomer, or the like as a tire frame can simplify a manufacturing process of a conventional tire such as molding or vulcanization, thereby improving productivity. Further, such a material has many advantages in terms of weight saving and recyclability compared to conventional materials. In particular, a thermoplastic polymer material is advantageous in terms of productivity, such as being capable of injection molding.

A tire using a resin material as described above for a tire frame includes a tire frame which is a resin member and a rubber member. Regarding adhesion between the resin member and the rubber member, for example, resorcinol-formaldehyde-latex (hereinafter, referred to as RFL) can be used as an adhesive to strongly adhere each other (for example, Japanese Patent Application Laid-Open (JP-A) No. 2013-87221). Reference is also made to EP 2727721, which discloses a film for a tire inner liner, JP 3692370, which discloses a pneumatic tire, EP 2452832, which discloses a pneumatic tire with an inner liner, EP 2665771, which discloses a rubber composition suitable for use as a cap ply, JP 2011-079240, which discloses a tire manufacturing apparatus, and EP 2762330, which discloses a tire at least part of which is formed of a thermoplastic material.

### SUMMARY OF INVENTION

### Technical Problem

On the other hand, since resistance to stress and resistance to internal pressure in a rubber tire are also demanded for a tire including a tire frame using a resin material, development is being made so that the tire shape can be maintained by the resin material itself.

For maintaining the shape of a tire, adhesion between a rubber member and a tire frame using a resin material is also an important subject, and further improvement in adhesion is desired.

However, since the adhesion method of JP-ANo. 2013-87221 is not particularly intended for a tire frame, there is still room for improvement as to whether or not an RFL-based adhesive is effective for adhering a tire frame and a rubber member, which requires a higher level of adhesiveness.

Although a method of firmly adhering a resin layer and a rubber member by an adhesion method using an organic solvent-based adhesive can be considered, this method is considerably more expensive than an RFL adhesive, handling is somewhat complicated, and there is a problem on a load on the environment.

In view of the above circumstances, one embodiment of the invention is to provide a tire in which a rubber member and a resin member are adhered sufficiently.

### Solution of Problem

The present invention concerns a tire according to claim 1, and a method for forming the tire according to claim 5.

### Advantageous Effects of Invention

According to one embodiment of the invention, a tire in which a rubber member and a resin member are adhered sufficiently can be provided.

### BRIEF DESCRIPTION OF DRAWINGS

Fig. 1A is a schematic diagram illustrating an example of a layer configuration of a rubber member and a resin member.
Fig. 1B is a schematic diagram illustrating an example of a layer configuration of a rubber member and a resin member.
Fig. 1C is a schematic diagram illustrating an example of a layer configuration of a rubber member and a resin member.
Fig. 1D is a schematic diagram illustrating an example of a layer configuration of a rubber member and a resin member.
Fig. 1E is a schematic diagram illustrating an example of a layer configuration of a rubber member and a resin member.
Fig. 2A is a perspective view illustrating a cross-section of a part of a tire according to the invention.
Fig. 2B is a cross-sectional view of a bead portion mounted on a rim.
Fig. 3 is a cross-sectional view taken along a tire rotational axis illustrating a state in which a reinforcing cord is embedded in a crown portion of a tire frame of the tire of a first embodiment.
Fig. 4 is an explanatory view for explaining an operation of embedding a reinforcing cord in a crown portion of a tire frame using a cord heating device and a roller.
Fig. 5A is a cross-sectional view of a tire according to one reference embodiment not according to the invention taken along the tire width direction.
Fig. 5B is an enlarged cross-sectional view of a bead portion taken along the tire width direction in a state in which a rim is fitted to the tire according to one reference embodiment not according to the invention.
Fig. 6 is a cross-sectional view taken along the tire width direction illustrating a region around a reinforcing cord layer of a tire according to a second reference embodiment not according to the invention.

### DESCRIPTION OF EMBODIMENTS

The tire according to the invention is a tire including: a rubber member formed of a rubber composition containing a diene-based rubber; and a ring-shaped tire frame formed of a resin material containing a polyamide-based thermoplastic resin, wherein the tire frame is composed of a pair of bead portions contacting a bead seat and a rim flange of a rim, side portions each extending outwardly from the bead portion in the tire radial direction, and a crown portion connecting the outer end in the tire radial direction of one of the side portions and the outer end in the tire radial direction of the other of the side portion; wherein an annular bead core made of a steel cord is embedded in each of the bead portions; wherein the tire case is obtained by joining together two or more tire case pieces, characterized in that: the rubber member is a tread that is adhered to the tire case via a layer (hereinafter sometimes referred to as "RFL layer") formed of a composition containing a resorcinol-formalin-latex (hereinafter sometimes simply referred to as "RFL")-based adhesive.

According to the tire of the invention, the resin member containing a polyamide-based thermoplastic resin and the rubber member are strongly adhered directly to each other by an RFL layer. As a result, peeling (at the interface) between the resin member and the rubber member can be suppressed, thereby providing a tire in which members are adhered sufficiently to each other. Since the RFL-based adhesive is a water-based adhesive, the tire can be provided by an adhesion method with reduced environmental load. The tire according to the invention includes a layer configuration in which the rubber member, the RFL layer, and the resin member are adhered in this order as a part of a tire structure, and it is not demanded that all the members corresponding to the rubber member and the members corresponding to the resin member are adhered via the RFL layer.

In the specification and the like, a numerical range expressed by "to" represents a range including numerical values of the upper limit and the lower limit thereof. Terms shown throughout this specification and the claims are described below.

In the present specification, the term "resin member" refers to a member formed of a resin material containing a polyamide-based thermoplastic resin.

In the present specification, the term "rubber member" refers to a member formed of a composition containing a diene-based rubber as a main component.

### << Tire >>

First, with regard to each member constituting the tire according to a reference embodiment, not according to the invention, specific examples of a layered structure in a case in which each member is adhered are provided, and each member is explained. Further, specific embodiments of the tire are described with reference to the drawings. These embodiments are reference embodiments, not according to the invention, unless they fall under the scope of the claims. Details are described below.

### Example of Layered Structure

Each member of a resin member, an RFL layer, and a rubber member is layered in this order.

Examples of the rubber member include an outer skin rubber such as a tread portion or a base, a ply, a cushion rubber, and a rubber cement.

The resin member is not particularly limited as long as it is a member using a polyamide-based thermoplastic resin, and examples thereof include a tire frame. In this case, it is preferable that an RFL layer and a rubber member are layered on a crown portion of the tire frame. In a case in which a reinforcing cord layer formed by coating a reinforcing cord with a resin material containing a polyamide-based thermoplastic resin is provided on a tire frame, the reinforcing cord layer or the like arranged on the surface of the tire frame can also be a resin member in the invention. In this case, it is preferable that an RFL layer and a rubber member are layered on the reinforcing cord layer.

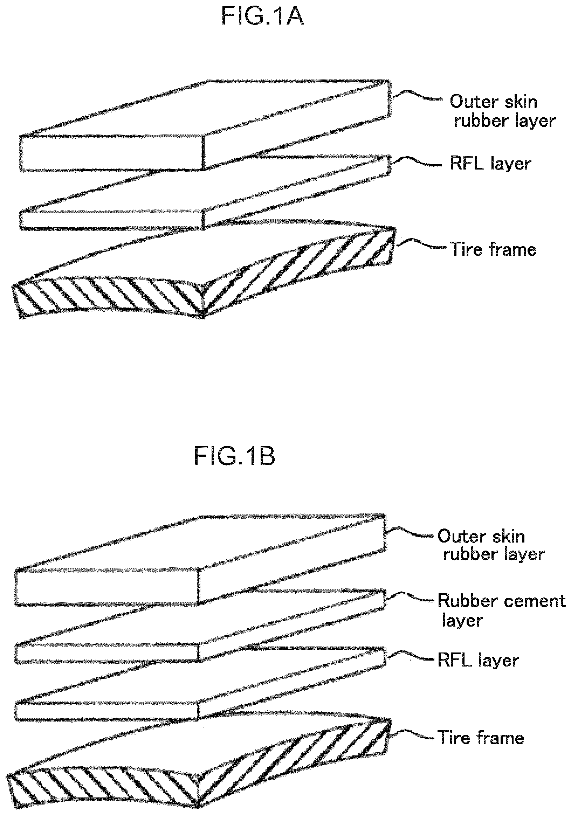

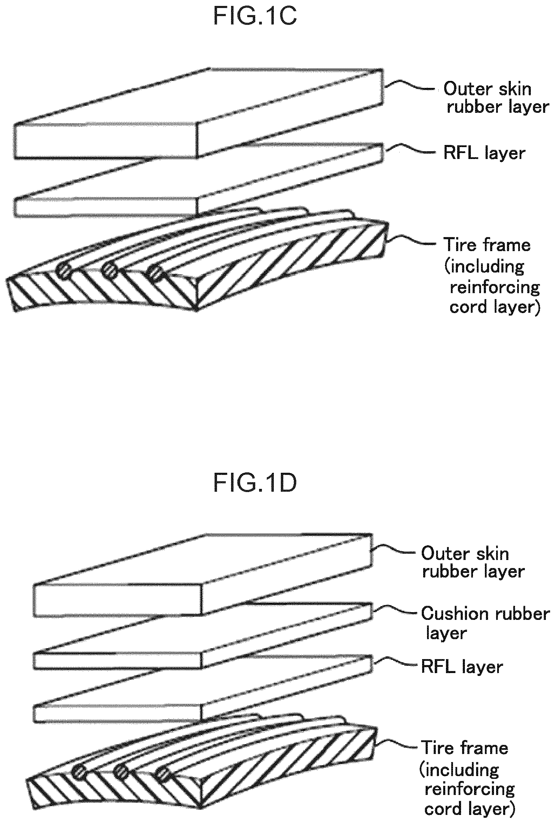

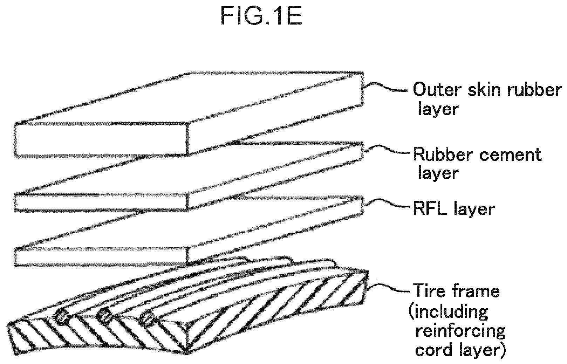

Figs. 1A to 1E illustrate specific examples (layer configurations) of a layered structure in a tire according to an embodiment of the disclosure. It is shown that, in the layer configuration illustrated in Fig. 1, the layers are layered in this order and adhered.

It is noted that the layer configuration of the tire according to the disclosure is not limited to the layer configuration illustrated in Fig. 1.

In Fig. 1A, an RFL layer and an outer skin rubber layer are layered in this order on a tire frame. In this layer configuration, the resin member in the disclosure is the tire frame. The outer skin rubber layer may be, for example, rubber cement or cushion rubber, or a tread portion may be directly adhered. For example, as illustrated in Fig. 1B, a rubber cement layer and an outer skin rubber layer (for example, a tread member) can be layered on an RFL layer.

In Fig. 1C, a reinforcing cord layer is arranged on a tire frame, and an RFL layer is arranged on the surface of the tire frame to have a layer configuration combined with an outer skin rubber layer. In this layer configuration, at least the tire frame is the resin member in the disclosure.

Further, when a reinforcing cord member contains a polyamide-based thermoplastic resin such as a polyamide-based thermoplastic elastomer, not only the tire frame but also the reinforcing cord member corresponds to the resin member in the disclosure.

In this case, the RFL layer adheres to the surface of the tire frame and the surface of the reinforcing cord layer. When the reinforcing cord layer does not contain a polyamide-based thermoplastic resin and the tire frame is adhered to the RFL layer, the tire frame may be the resin member in the disclosure. Also in the layer configuration of Fig. 1C, the outer skin rubber layer may be, for example, rubber cement or cushion rubber, or a tread portion may be directly adhered. For example, as illustrated in Fig. ID, a cushion rubber layer and an outer skin rubber layer (for example, a tread member) may be layered on an RFL layer. Further, as illustrated in Fig. IE, a rubber cement layer and an outer skin rubber layer (for example, a tread member) may be layered on an RFL layer.

### Rubber Member

The rubber member in the present embodiment is a member formed of a rubber composition containing a diene-based rubber. The diene-based rubber contained in the rubber composition is preferably unvulcanized rubber. The diene-based rubber is not particularly limited, and examples thereof include natural rubber (NR), a variety of polybutadiene rubbers (BR), polyisoprene rubber (IR), styrene-butadiene copolymer rubber (SBR), and acrylonitrile-butadiene copolymer rubber (NBR). For the rubber member, in addition to the diene-based rubber, a variety of additives commonly formulated for tires and other rubber compositions such as carbon black, a vulcanizing agent, a vulcanization accelerator, a variety of oils, an antioxidant, or a plasticizer can be added. A rubber composition containing these additives can be kneaded and vulcanized by a general method.

The shape of the rubber member is not particularly limited as long as the rubber member is a member formed of a rubber composition containing a diene-based rubber. Examples of the rubber member include outer skin rubber, a ply, cushion rubber, and rubber cement. Examples of the outer skin rubber include a tread and a base. With respect to the ply and the cushion rubber, a member formed of a composition containing a diene-based rubber can be used for a predetermined portion for an appropriate application.

With respect to the rubber member, two or more of rubber members may be provided. For the two or more of rubber members, one or several of the above-mentioned members can be used.

### < Rubber Cement >

As described above, the rubber member constituting the tire according to an embodiment of the disclosure may include rubber cement. Rubber cement refers to a composition which includes a rubber component and a solvent to dissolve the rubber component and is used for adhering rubber members to each other or adhering a rubber member to a member including a rubber component.

In a case in which rubber cement is used, when adhering two or more of rubber members (for example, outer skin rubber) to each other, sufficient adhesion force or adhesive force between the rubber members can be ensured, for example, before a vulcanization process.

The rubber cement is not particularly limited as long as it is a member formed of a composition containing, for example, a diene-based rubber. For example, one in which rubber is dissolved in an organic solvent, one in which rubber is dispersed using an emulsifier in water, or the like can be used. From the viewpoint of sufficiently exerting the effect of rubber cement, it is preferable to appropriately select the rubber cement in accordance with the material of outer skin rubber or the like, and for example, the rubber cement or the like described in JP-ANo.2011-241363 can be used. For example, when butadiene rubber is used for the outer skin rubber, it is preferable to use a butadiene-based splicing cement as the rubber cement composition. Further, in this case, it is preferable to use a butadiene-based splicing cement blended with butadiene rubber. Besides this, as the rubber cement composition, a solventless cement in which a liquid elastomer such as liquid butadiene rubber is blended, or a cement containing a blend of isoprene rubber (IR)-butadiene rubber (SBR) as a main component can be used.

### Resin Member

Examples of the resin member constituting the tire according to an embodiment of the disclosure include a resin member containing a polyamide-based thermoplastic resin. Since the resin member contains a polyamide-based thermoplastic resin, it has high adhesion to an RFL-based adhesive, and as a result, the adhesive force between a rubber member and the resin member can be enhanced.

The tire frame constituting the tire according to an embodiment of the disclosure is also formed of a resin material containing a polyamide-based thermoplastic resin. By forming the tire frame with a resin material containing a polyamide-based thermoplastic resin, the elastic modulus of the tire itself and the formability at the time of manufacture can be secured.

When a reinforcing cord layer containing a reinforcing cord member and a resin material is provided on a tire frame, it is preferable that the reinforcing cord layer is also the resin member.

As described above, in the tire according to an embodiment of the disclosure, it is preferable that the resin member is at least one of the tire frame or the reinforcing cord layer containing a reinforcing cord member and a resin material.

In addition to the polyamide-based thermoplastic resin, the resin member may contain additives such as a filler, a coupling agent, an antioxidant, a lubricant, a surface treatment agent, a pigment, an ultraviolet absorber, an antistatic agent, a dispersant, a neutralizer, or an inorganic hollow filler such as glass fiber. These resins and additives can be used singly or in arbitrary mixture. When components other than resin such as additives are added to a resin material containing the polyamide-based thermoplastic resin, the content of a resin component in the resin material is preferably 50% by mass or more, and more preferably 90% by mass or more based on the total amount of the resin material. The content of the resin component in the resin material is the remainder obtained by subtracting the total content of a variety of additives from the total amount of the resin component.

The resin member is not limited to a tire frame or a coated resin layer, and is not particularly limited as long as it is a resin member used for a tire structure.

### [Polyamide-based Thermoplastic Resin]

The polyamide-based thermoplastic resin contained in the resin member can be appropriately selected according to the role of the member.

For example, when a tire frame or a coated cord layer corresponds to the resin member, the polyamide-based thermoplastic resin is preferably a polyamide-based thermoplastic elastomer (TPA).

Here, the term "polyamide-based thermoplastic elastomer" means a thermoplastic elastomer consisting of a copolymer including a polymer which forms a crystalline hard segment having a high melting point and a polymer which forms a non-crystalline soft segment having a low glass transition temperature, in which the polymer which forms a hard segment has an amide bond (-CONH-) in a backbone thereof.

In the thermoplastic elastomer, a portion that connects a hard segment and a soft segment is referred to as "connection portion".

Examples of the polyamide-based thermoplastic elastomer include a material in which at least a polyamide forms a crystalline hard segment having a high melting point, and another polymer (for example, polyester or polyether) forms a non-crystalline soft segment having a low glass transition temperature.

### - Hard Segment -

Examples of the polyamide that forms the hard segment include a polyamide synthesized by using a monomer represented by the following Formula (1) or Formula (2).

Formula (1): H₂N-R¹COOH

In Formula (1), R¹ represents a molecular chain of an aliphatic hydrocarbon having from 2 to 20 carbon atoms. For example, the molecular chain is preferably an alkylene group having from 2 to 20 carbon atoms.

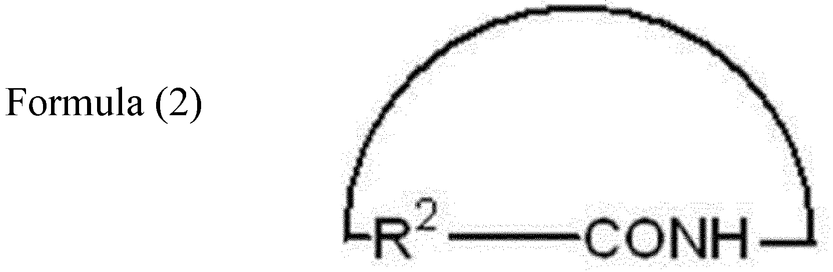

In Formula (2), R² represents a molecular chain of an aliphatic hydrocarbon having from 3 to 20 carbon atoms. For example, the molecular chain is preferably an alkylene group having from 3 to 20 carbon atoms.

In Formula (1), R¹ is preferably a molecular chain of an aliphatic hydrocarbon having from 3 to 18 carbon atoms or an alkylene group having from 3 to 18 carbon atoms, more preferably a molecular chain of an aliphatic hydrocarbon having from 4 to 15 carbon atoms or an alkylene group having from 4 to 15 carbon atoms, and still more preferably a molecular chain of an aliphatic hydrocarbon having from 10 to 15 carbon atoms or an alkylene group having from 10 to 15 carbon atoms. In Formula (2), R² is preferably a molecular chain of an aliphatic hydrocarbon having from 3 to 18 carbon atoms or an alkylene group having from 3 to 18 carbon atoms, more preferably a molecular chain of an aliphatic hydrocarbon having from 4 to 15 carbon atoms or an alkylene group having from 4 to 15 carbon atoms, and still more preferably a molecular chain of an aliphatic hydrocarbon having from 10 to 15 carbon atoms or an alkylene group having from 10 to 15 carbon atoms.

Examples of a monomer represented by Formula (1) or Formula (2) include a ω-aminocarboxylic acid and a lactam. Examples of the polyamide forming a hard segment include a polycondensate of a ω-aminocarboxylic acid, a polycondensate of a lactam, and a co-polycondensate of a diamine and a dicarboxylic acid.

Examples of the ω-aminocarboxylic acid include an aliphatic ω-aminocarboxylic acid having from 5 to 20 carbon atoms, such as 6-aminocaproic acid, 7-aminoheptanoic acid, 8-aminooctanoic acid, 10-aminocapric acid, 11-aminoundecanoic acid, or 12-aminododecanoic acid. Examples of the lactam include an aliphatic lactam having from 5 to 20 carbon atoms, such as lauryl lactam, ε-caprolactam, undecanelactam, ω-enantholactam, or 2-pyrrolidone.

Examples of the diamine include diamine compounds including an aliphatic diamine having from 2 to 20 carbon atoms, such as ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, or 3-methylpentamethylenediamine. The dicarboxylic acid may be represented by HOOC-(R³)m-COOH, wherein R³ represents a hydrocarbon molecular chain having from 3 to 20 carbon atoms, and m represents 0 or 1. Examples of the dicarboxylic acid include an aliphatic dicarboxylic acid having from 2 to 22 carbon atoms, such as oxalic acid, succinic acid, glutaric acid, adipic acid, pimelic acid, suberic acid, azelaic acid, sebacic acid, or dodecanedioic acid.

Examples of the polyamide that forms the hard segment include a polyamide (polyamide 6) obtained by ring-opening polycondensation of ε-caprolactam, a polyamide (polyamide 11) obtained by ring-opening polycondensation of undecanelactam, a polyamide (polyamide 12) obtained by ring-opening polycondensation of lauryl lactam, a polyamide (polyamide 12) obtained by polycondensation of 12-aminododecanoic acid, and a polycondensate polyamide (polyamide 66) of a diamine and a dibasic acid.

Polyamide 6 can be expressed by, for example, {CO-(CH₂)₅-NH}ₙ, wherein n represents the number of repeating units, which may be freely set. Here, n is preferably from 2 to 100, and more preferably from 3 to 50.

Polyamide 11 can be expressed by, for example, {CO-(CH₂)₁₀-NH}ₙ, wherein n represents the number of repeating units, which may be freely set. Here, n is preferably from 2 to 100, and more preferably from 3 to 50.

Polyamide 12 can be expressed by, for example, {CO-(CH₂)n-NH}ₙ, wherein n represents the number of repeating units, which may be freely set. Here, n is preferably from 2 to 100, and more preferably from 3 to 50.

Polyamide 66 can be expressed by, for example, {CO(CH₂)₄CONH(CH₂)₆NH}ₙ, wherein n represents the number of repeating unit, which may be freely set. Here, n is preferably from 2 to 100, and more preferably from 3 to 50.

The polyamide-based thermoplastic elastomer preferably includes a polyamide (polyamide 12) having a unit structure represented by -[CO-(CH₂)₁₁-NH]- as a hard segment. As mentioned above, polyamide 12 may be obtained by ring-opening polycondensation of lauryl lactam or polycondensation of 12-aminododecanoic acid.

The number average molecular weight of the polymer (polyamide) that forms the hard segment is preferably from 300 to 15,000 from the viewpoint of the melt molding property.

### - Soft Segment -

Examples of the polymer that forms the soft segment (i.e., a polymer compound that forms the soft segment) includes a polyester and a polyether, such as polyethylene glycol, polypropylene glycol, polytetramethylene ether glycol (PTMG), or an ABA-type triblock polyether. The polymer may be used singly, or in combination of two or more kinds thereof.

The polymer that forms the soft segment may be a polymer having a functional group introduced to a terminal thereof. The functional group may be a group that can react with a terminal group of a compound (e.g., a polymer that forma the hard segment, a chain extender, *etc*.) that is to be reacted with a polymer that forms the soft segment. For example, in a case in which a terminal group of a compound to be reacted with a polymer that forms the soft segment is a carboxy group, the functional group may be an amino group or the like. For example, in a case in which a terminal group of a compound to be reacted with a polymer that forms the soft segment is an amino group, the functional group may be a carboxy group or the like.

With respect to the polymer that forms the soft segment, examples of a polymer having an amino group introduced to a terminal thereof include a polyether diamine obtained by reacting ammonia or the like with terminals of a polyether. Specific examples thereof include an ABA-type triblock polyether diamine. Meanwhile, with respect the polymer that forms the soft segment, examples of a polymer having a carboxy group introduced to a terminal thereof include a polyether dicarboxylic acid obtained by converting hydroxyl groups at terminals of a polyether into carboxy groups by an oxidation reaction. Specific examples thereof include an ABA-type triblock polyether dicarboxylic acid.

The "ABA-type triblock polyether" may be a polyether represented by the following Formula (3).

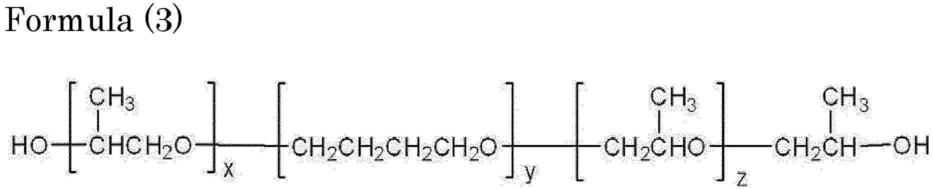

In Formula (3), each of x and z independently represents an integer of 1 to 20, and y represents an integer of 4 to 50.

In Formula (3), each of x and z is preferably an integer of from 1 to 18, and more preferably an integer of 1 to 16, still more preferably an integer of 1 to 14, and even more preferably an integer of 1 to 12. In Formula (3), y is preferably an integer of 5 to 45, more preferably an integer of 6 to 40, still more preferably an integer 7 to 35, and even more preferably an integer of 8 to 30.

Further, the "ABA-type triblock polyether diamine" may be a polyether diamine represented by the following Formula (N).

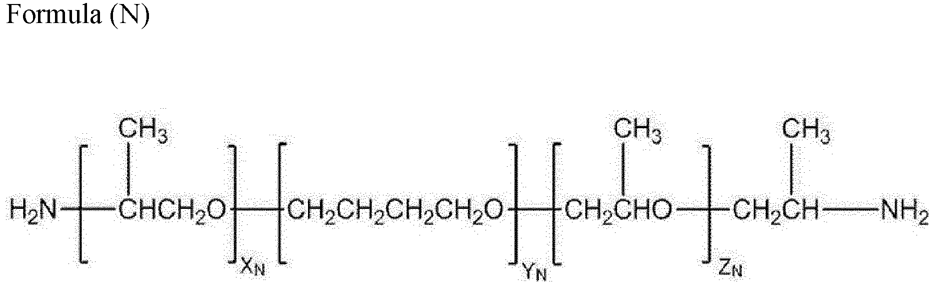

In Formula (N), each of X_{N} and Z_{N} independently represents an integer of 1 to 20, and Y_{N} represents an integer of 4 to 50.

In Formula (N), each of X_{N} and Z_{N} is preferably an integer of 1 to 18, more preferably an integer of 1 to 16, still more preferably an integer of 1 to 14, and even more preferably an integer of 1 to 12. In Formula (N), Y_{N} is preferably an integer of 5 to 45, more preferably an integer of 6 to 40, still more preferably an integer of 7 to 35, and even more preferably an integer of 8 to 30.

The polymer that forms the soft segment may include as a monomer unit a diamine, such as a branched saturated diamine having from 6 to 22 carbon atoms, a branched alicyclic diamine having from 6 to 16 carbon atoms, or norbornane diamine. A branched saturated diamine having from 6 to 22 carbon atoms, a branched alicyclic diamine having from 6 to 16 carbon atoms, and norbornane diamine may be used singly, or in combination of two or more kinds thereof. These diamines are preferably used in combination with the ABA-type triblock polyether or the ABA-type triblock polyether diamine described above.

Examples of the branched saturated diamine having from 6 to 22 carbon atoms include 2,2,4-trimethyl-1,6-hexanediamine, 2,4,4-trimethyl-1,6-hexanediamine, 1,2-diaminopropane, 1,3-diaminopentane, 2-methyl-1,5-diaminopentane, and 2-methyl-1,8-diaminooctane.

Examples of the branched alicyclic diamine having from 6 to 16 carbon atoms include 5-amino-2,2,4-trimethyl-1-cyclopentanemethylamine and 5-amino-1,3,3-trimethylcyclohexane methyl amine. Each of these diamines may be in the cis-form or the trans-form, or a mixture of these isomers.

Examples of the norbornane diamine include 2,5-norbornane dimethyl amine, 2,6-norbornane dimethyl amine, and a mixture thereof.

The polymer that forms the soft segment may include as a monomer unit an additional diamine compound other than those described above. Examples of additional diamine compound include an aliphatic diamine such as ethylene diamine, trimethylene diamine, tetramethylene diamine, hexamethylene diamine, heptamethylene diamine, octamethylene diamine, nonamethylene diamine, decamethylene diamine, undecamethylene diamine, dodecamethylene diamine, 2,2,4-trimethylhexamethylene diamine, 2,4,4-trimethylhexamethylene diamine, or 3-methylpentanemethylene diamine; an alicyclic diamine such as bis(4-aminocyclohexyl)methane, bis(4-aminocyclohexyl)propane, 1,3-bis(aminomethyl)cyclohexane, or 1,4- bis(aminomethyl)cyclohexane; and an aromatic diamine such as metaxylylene diamine or paraxylylene diamine.

These diamines may be used singly, or in combination of two or more kinds thereof as appropriate.

However, from the viewpoint of light resistance, the polymer that forms the soft segment preferably contains no aromatic ring.

The weight average molecular weight of the polymer that forms the soft segment is preferably from 200 to 6,000, more preferably from 1,000 to 6,000, and still more preferably from 3,000 to 6,000, from the viewpoint of high toughness and low temperature flexibility.

The combination of the hard segment and the soft segment is, for example, a combination of any of the above examples of the hard segment and any of the above examples of the soft segment. Among these, the combination of a hard segment and a soft segment is preferably a combination of a ring-opening polycondensate of lauryl lactam and polyethylene glycol, a combination of a ring-opening polycondensate of lauryl lactam and polypropylene glycol, a combination of a ring-opening polycondensate of lauryl lactam and polytetramethylene ether glycol, a combination of a ring-opening polycondensate of lauryl lactam and an ABA-type triblock polyether, a combination of a ring-opening polycondensate of lauryl lactam and an ABA-type triblock polyether diamine, a combination of a polycondensate of aminododecanoic acid and polyethylene glycol, a combination of a polycondensate of aminododecanoic acid and polypropylene glycol, a combination of a polycondensate of aminododecanoic acid and polytetramethylene ether glycol, a combination of a polycondensate of aminododecanoic acid and an ABA-type triblock polyether, or a combination of a polycondensate of aminododecanoic acid and an ABA-type triblock polyether diamine; and more preferably a combination of a ring-opening polycondensate of lauryl lactam and an ABA-type triblock polyether, a combination of a ring-opening polycondensate of lauryl lactam and an ABA-type triblock polyether diamine, a combination of a polycondensate of aminododecanoic acid and an ABA-type triblock polyether, or a combination of a polycondensate of aminododecanoic acid and an ABA-type triblock polyether diamine.

### - Connection Portion -

The connection portion of the polyamide-based thermoplastic elastomer may be, for example, a moiety bound by a chain extender containing an aromatic ring.

Examples of the chain extender containing an aromatic ring include an aromatic dicarboxylic acid and a derivative thereof, an aromatic diamine, an aromatic diol, and an aromatic diisocyanate.

Specific examples of the aromatic dicarboxylic acid include phthalic acid, isophthalic acid, terephthalic acid, phenylenediacetic acid, naphthalenedicarboxylic acid (such as 2,6-naphthalenedicarboxylic acid, 2,7-naphthalenedicarboxylic acid, 1,4-naphthalenedicarboxylic acid, or 2,3-naphthalenedicarboxylic acid), biphenyldicarboxylic acid (such as 4,4-biphenyldicarboxylic acid or 2,2-biphenyldicarboxylic acid), anthracenedicarboxylic acid (such as 2,6-anthracenedicarboxylic acid or 2,7-anthracenedicarboxylic acid), pyrenedicarboxylic acid (such as 4,8-pyrenedicarboxylic acid or 1,6-pyrenedicarboxylic acid), triphenylenedicarboxylic acid (such as 2,7-triphenylenedicarboxylic acid or 1,7-triphenylenedicarboxylic acid), and porphyrin dicarboxylic acid (such as 21H,23H-porphyrin-2,12-dicarboxylic acid.).

Specific examples of the aromatic diamine include o-phenylenediamine, m-phenylenediamine, *p*-phenylenediamine, *m*-xylylenediamine, *p*-xylylenediamine, 1,4-naphthalenediamine, 1,5-naphthalenediamine, 2,6-naphthalenediamine, 2,7-naphthalenediamine, and anthracene-9,10-diacetic acid.

Specific examples of an aromatic diol include o-dihydroxybenzene, m-dihydroxybenzene, *p*-dihydroxybenzene, 1,4-naphthalenediol, 1,5-naphthalenediol, 2,6-naphthalenediol, 2,7-naphthalenediol, bisphenol A, an ethylene oxide adduct of bisphenol A, a propylene oxide adduct of bisphenol A, and 9,10-dihydroxymethylanthracene.

Specific examples of the aromatic diisocyanate include 1,5-naphthalene diisocyanate, 4,4'-diphenylmethane diisocyanate, 4,4'-diphenyl dimethylmethane diisocyanate, 1,3-phenylene diisocyanate, 1,4-phenylene diisocyanate, 2,4-tolylene diisocyanate, 2,6-tolylene diisocyanate, xylylene diisocyanate, tetramethylxylylene diisocyanate, 2,6-diisopropylphenyl isocyanate, and 1,3,5-triisopropylbenzene-2,4-diisocyanate.

### - Molecular Weight -

The weight average molecular weight of the polyamide-based thermoplastic elastomer is, for example, from 15,700 to 200,000. In a case in which the weight average molecular weight of the polyamide-based thermoplastic elastomer is less than 15,700, the fittability to a rim may be reduced. In a case in which the weight average molecular weight of the polyamide-based thermoplastic elastomer exceeds 200,000, the melt viscosity increases, which may requires increased forming temperature and mold temperature in order to prevent insufficient filling in the production of a tire frame. In this case, the cycle time becomes longer and productivity is decreased.

The weight average molecular weight of the polyamide-based thermoplastic elastomer is preferably from 20,000 to 160,000. The weight average molecular weight of the polyamide-based thermoplastic elastomer can be measured by Gel Permeation Chromatography (GPC), using, for example, a GPC (Gel Permeation Chromatography) system such as "HLC-8320 GPC EcoSEC" available from TOSOH CORPORATION. The same applies to the weight average molecular weight of other thermoplastic elastomers as described below.

The mass ratio (HS/SS) of the hard segment (HS) to the soft segment (SS) in the polyamide-based thermoplastic elastomer is preferably from 30/70 to 90/10 from the viewpoint of molding property, and more preferably from 54/46 to 88/12, and still more preferably from 54/46 to 75/25, from the viewpoint of fittability to a rim and low-loss property.

The content of the hard segment in the polyamide-based thermoplastic elastomer is preferably from 5% by mass to 95% by mass, more preferably from 10% by mass to 90% by mass, and still more preferably from 15% by mass to 85% by mass, with respect to the total amount of the polyamide-based thermoplastic elastomer.

The content of the soft segment in the polyamide-based thermoplastic elastomer is preferably from 5% by mass to 95% by mass, more preferably from 10% by mass to 90% by mass, and still more preferably from 15% by mass to 85% by mass, with respect to the total amount of the polyamide-based thermoplastic elastomer.

In a case in which the chain extender is used, the content thereof is preferably set so that the terminal groups (such as a hydroxyl group or an amino group) of the polymer that forms the soft segment and the groups (such as a carboxyl group) in the chain extender which are to be bonded to the terminal groups of the soft segment, are substantially equimolar.

The polyamide-based thermoplastic elastomer may have a connection portion that does not contain an aromatic ring, in addition to the connection portion containing an aromatic ring. The proportion (mass ratio) of a connection portion containing an aromatic ring with respect to the total amount of the connection portions in a polyamide-based thermoplastic elastomer is, for example, from 1% by mass to 100% by mass, and preferably from 3% by mass to 100% by mass.

### - Production Method -

The polyamide-based thermoplastic elastomer can be synthesized by polymerizing, by a known method, the polymer that forms the hard segment and the polymer that domes the soft segment, using the chain extender.

For example, the polyamide-based thermoplastic elastomer may be obtained by polymerizing a monomer which is a constituent of the hard segment (for example, a ω-aminocarboxylic acid such as 12-aminododecanoic acid, and lactam such as lauryl lactam) and a chain extender (such as adipic acid or decanedicarboxylic acid) in a vessel, and then further polymerizing with the addition of a polymer that forms the soft segment (for example, polypropylene glycol, an ABA-type triblock polyether, and diamine derived therefrom by modifying the terminal to an amino group).

In particular, in a case in which a ω-aminocarboxylic acid is used as a monomer that forms the hard segment, the synthesis can be done by performing melt-polymerization at ambient pressure, or melt-polymerization at ambient pressure followed by melt-polymerization at reduced pressure. In a case in which lactam is used as a monomer that forms the hard segment, the polymer can be manufactured by a method including melt polymerization under a pressure of from 0.1 MPa to 5 MPa with the coexistence of an appropriate amount of water, followed by melt-polymerization at ambient pressure and/or melt-polymerization at reduced pressure. These synthetic reactions can be performed either in a batch method or in a continuous method. For the above-mentioned synthetic reactions, a batch type reaction tank, a single-tank type or multi-tank type continuous reaction apparatus, a tube-shaped continuous reaction apparatus, or the like may be used singly or in combination thereof as appropriate.

In manufacturing the polyamide-based thermoplastic elastomer, polymerization temperature is preferably from 150°C to 300°C, and more preferably from 160°C to 280°C. Polymerization time may be appropriately determined in view of the relation between the average molecular weight of the polyamide-based thermoplastic elastomer to be synthesized and the polymerization temperature thereof, and is preferably from 0.5 hours to 30 hours, and more preferably from 0.5 hours to 20 hours.

In manufacturing the polyamide-based thermoplastic elastomer, a monoamine or diamine such as lauryl amine, stearylamine, hexamethylene diamine, or metaxylylene diamine; or a monocarboxylic acid or dicarboxylic acid such as acetic acid, benzoic acid, stearic acid, adipic acid, sebacic acid, or dodecanedioic acid may be added in order to adjust the molecular weight and stabilize melt viscosity during mold processing, as needed. These compounds may be appropriately selected in consideration of properties such as molecular weight or viscosity of the polyamide-based thermoplastic elastomer to be obtained as long as these compounds do not adversely affect the advantageous effects of the invention.

In manufacturing the polyamide-based thermoplastic elastomer, a catalyst may be used, if necessary. Examples of the catalyst include a compound that includes at least one selected from the group consisting of P, Ti, Ge, Zn, Fe, Sn, Mn, Co, Zr, V, Ir, La, Ce, Li, Ca, and Hf.

Examples of the catalyst include inorganic phosphoric compounds, organic titanium compounds, organic zirconium compounds, and organic tin compounds.

Specific examples of the inorganic phosphoric compounds include a phosphor-containing acid such as phosphoric acid, pyrophosphoric acid, polyphosphoric acid, phosphorous acid, or hypophosphorous acid; an alkali metal salt of a phosphor-containing acid; and an alkaline earth metal salt of a phosphor-containing acid.

Examples of the organic titanium compounds include a titanium alkoxide (such as titanium tetrabutoxide, or titanium tetraisopropoxide).

Examples of the organic zirconium compounds include a zirconium alkoxide such as zirconium tetrabutoxide (also referred to as "Zr(OBu)₄" or "Zr(OC₄H₈)₄").

Examples of the organic tin compounds include a distannoxane compound (such as 1-hydroxy-3-isothiocyanate-1,1,3,3-tetrabutyl distannoxane), tin acetate, dibutyl tin dilaurate, and butyltin hydroxide oxide hydrate.

The amount of the catalyst to be added and the timing of the addition thereof are not particularly limited, as long as a target product can be rapidly obtained under such conditions.

Examples of the polyamide-based thermoplastic elastomer include one in which the hard segment has a polyamide structure, the soft segment has a polyether structure, and the connection portion is a structural unit derived from an aromatic dicarboxylic acid or an aromatic diamine.

The polyamide-based thermoplastic elastomer is preferably one in which the hard segment is a structural unit derived from a polyamide synthesized using the monomer represented by Formula (1) or Formula (2) described above, the soft segment is a structural unit derived from a polyether having a hydroxyl group or an amino group at a terminal thereof, and the connection portion is a structural unit derived from an aromatic dicarboxylic acid; or one in which the hard segment is a structural unit derived from a polyamide synthesized using the monomer represented by Formula (1) or Formula (2) described above, the soft segment is a structural unit derived from a polyether having a carboxy group at a terminal thereof, and the connection portion is a structural unit derived from an aromatic diamine.

Specifically, preferable examples of the polyamide-based thermoplastic elastomers include a combination of a ring-opening polycondensate of lauryl lactam, polyethylene glycol, and terephthalic acid; a combination of a ring-opening polycondensate of lauryl lactam, polypropylene glycol, and terephthalic acid; a combination of a ring-opening polycondensate of lauryl lactam, polytetramethylene ether glycol, and terephthalic acid; a combination of a ring-opening polycondensate of lauryl lactam, an ABA-type triblock polyether, and terephthalic acid; a combination of a ring-opening polycondensate of lauryl lactam, an ABA-type triblock polyether diamine, and 2,6-anthracenedicarboxylic acid; a combination of a ring-opening polycondensate of lauryl lactam, polyethylene glycol, and 2,6-anthracenedicarboxylic acid; a combination of a ring-opening polycondensate of lauryl lactam, polypropylene glycol, and 2,6-anthracenedicarboxylic acid; a combination of a ring-opening polycondensate of lauryl lactam, polytetramethylene ether glycol, and 2,6-anthracenedicarboxylic acid; a combination of a ring-opening polycondensate of lauryl lactam, an ABA-type triblock polyether, and 2,6-anthracenedicarboxylic acid; a combination of a ring-opening polycondensate of lauryl lactam, an ABA-type triblock polyether diamine, and 2,6-anthracenedicarboxylic acid; the combination of a polycondensate of aminododecanoic acid, polyethylene glycol, and terephthalic acid; a combination of a polycondensate of aminododecanoic acid, polypropylene glycol, and terephthalic acid; a combination of a polycondensate of aminododecanoic acid, polytetramethylene ether glycol, and terephthalic acid; a combination of a polycondensate of aminododecanoic acid, an ABA-type triblock polyether, and terephthalic acid; a combination of a polycondensate of aminododecanoic acid, an ABA-type triblock polyether diamine, and terephthalic acid; a combination of a polycondensate of aminododecanoic acid, polyethylene glycol, and 2,6-anthracenedicarboxylic acid; a combination of a polycondensate of aminododecanoic acid, polypropylene glycol, and 2,6-anthracenedicarboxylic acid; a combination of a polycondensate of aminododecanoic acid, polytetramethylene ether glycol, and 2,6-anthracenedicarboxylic acid; a combination of a polycondensation product of aminododecanoic acid, an ABA-type triblock polyether, and 2,6-anthracenedicarboxylic acid; and a combination of a polycondensate of aminododecanoic acid, an ABA-type triblock polyether diamine, and 2,6-anthracenedicarboxylic acid. More preferable examples thereof include a combination of a ring-opening polycondensate of lauryl lactam, an ABA-type triblock polyether, and terephthalic acid; a combination of a polycondensate of aminododecanoic acid, an ABA-type triblock polyether, and terephthalic acid; a combination of a polycondensate of aminododecanoic acid, an ABA-type triblock polyether diamine, and 2,6-anthracenedicarboxylic acid; a combination of a polycondensate of aminododecanoic acid, polytetramethylene ether glycol, and terephthalic acid; and a combination of a polycondensate of aminododecanoic acid, polytetramethylene ether glycol, and 2,6-anthracenedicarboxylic acid.

As the polyamide-based thermoplastic elastomer, a combination of preferred aspects described above may be used regarding the combination, the constitutional ratio, the molecular weight, and the like of structural units.

### Resorcinol-formaldehyde-latex (RFL)-based Adhesive

The RFL-based adhesive for forming an RFL layer is an adhesive containing RFL as a main component. RFL is a solution of a composition composed of a latex and a resorcinol-formaldehyde condensate obtained by a resol-formation reaction. The resorcinol-formaldehyde condensate is an oligomer obtained by condensing resorcinol and formaldehyde or a resorcinol-formaldehyde condensate having a relatively low molecular weight and formaldehyde by a resol-formation reaction. The adhesive contains a constitutional unit derived from formaldehyde and a constitutional unit derived from resorcinol, and a state in which the constitutional unit derived from formaldehyde is stoichiometrically deficient is maintained, whereby the resin member can be maintained at a low molecular weight and soluble.

Examples of the latex include acrylic rubber latex, acrylonitrile-butadiene rubber latex, isoprene rubber latex, urethane rubber latex, ethylene-propylene rubber latex, butyl rubber latex, chloroprene rubber latex, silicone rubber latex, styrene-butadiene rubber latex, natural rubber latex, vinyl pyridine-styrene-butadiene rubber latex, butadiene rubber latex, butyl rubber latex, carboxylated butadiene-styrene copolymer latex or chlorosulfonated polyethylene latex, and nitrile rubber latex. Among these, vinylpyridine-styrene-butadiene rubber latex is preferably used from the viewpoint of adhesiveness with a rubber member. Furthermore, in this case, a copolymer rubber latex having a double structure obtained by two-stage polymerization of vinyl pyridine, styrene, and butadiene is more preferably used. These may be used singly or as a mixture of two or more kinds thereof, or they may be allowed to coexist in a reaction system for reacting resorcinol and formaldehyde before the reaction.

The copolymer rubber latex having double structure obtained by two-stage polymerization of vinyl pyridine, styrene, and butadiene is a copolymer rubber latex of vinyl pyridine, styrene, and butadiene, which can be obtained by (i) polymerizing a monomer mixture of a styrene content of from 10% by mass to 60% by mass, a butadiene content of less than 60% by mass, and a vinyl pyridine content of from 0.5% by mass to 15% by mass, and then, (ii) polymerizing a monomer mixture of a styrene content of from 10% by mass to 40% by mass, a butadiene content of from 45% by mass to 75% by mass, and a vinyl pyridine content of from 5% by mass to 20% by mass with a styrene content lower than the styrene content used in the polymerization in (i).

### <Preparation of RFL-based Adhesive>

The RFL-based adhesive has a structure in which a latex and a polymer obtained by resol-formation of a resorcinol-formaldehyde condensate are sufficiently entangled three-dimensionally. For this reason, when preparing the RFL-based adhesive, the resol-formation reaction is carried out in a solution in which the latex is dispersed.

As the solution used in this case, acidic, neutral, or alkaline water, or an organic solvent such as acetone or alcohol may be used. The latex has low water solubility in the region where the pH is neutral, and it is preferable to use alkaline or neutral water in order to sufficiently perform the resorcinol-formaldehyde condensation reaction (resol-formation reaction) in ageing. This resol-formation reaction is usually carried out preferably at pH 8.0 or higher, preferably from at pH 8.5 to 10.0.

Here, the alkaline water refers to a solution in water of sodium hydroxide, lithium hydroxide, potassium hydroxide, ammonium hydroxide, or an organic amine such as monomethylamine or ammonia. A latex can also be dispersed in neutral water by using a ball mill or a sand mill using an arbitrary anionic surfactant. In this case, in order to effectively develop the adhesive force, the amount of the surfactant needs to be reduced to a small amount to such an extent that the dispersed state does not deteriorate.

The molar ratio (F/R) of formaldehyde (F) to resorcinol (R) in the RFL liquid, the ratio (RF/L) of resorcinol to formaldehyde total mass (RF) to the solids mass (L) of all latex, or the like can be appropriately selected according to the purpose. From the viewpoint of securing a suitable adhesive strength, it is preferable that the molar ratio (F/R) of formaldehyde (F) to resorcinol (R) is in the range of from 1/9 to 6/4.

Examples of a method of reacting the resorcinol-formaldehyde condensate obtained by resol-formation under mixing with a latex include: a method of mixing raw materials of a resorcinol-formaldehyde condensate (resorcinol, a relatively low molecular weight resorcinol-formaldehyde condensate, and formaldehyde) and a latex in an alkaline solution; and a method in which, at the start of the reaction, a latex is not added, a resol-formation reaction is started with raw materials of a resorcinol-formaldehyde condensate under alkaline liquid condition, and at the earliest possible stage of the reaction, a reaction intermediate of low degree of condensation is mixed with the latex to continue the reaction.

### < Adhesion Method >

Adhesion of the resin member and the rubber member with the RFL-based adhesive can be achieved, for example, by applying an RFL-based adhesive to an unvulcanized rubber member or a resin member, bonding them together, and then performing heat treatment or the like as needed.

A pretreatment performed on each member before applying the RFL-based adhesive is preferably appropriately selected as needed. For example, before the application of the RFL-based adhesive, adhering surfaces of a resin member and a rubber member are pretreated in advance, whereby the adhesive force can be strengthened. Examples of such pretreatment methods include electron beam, microwave, corona discharge treatment, plasma treatment, and degreasing treatment. Among them, corona discharge treatment, plasma treatment, and degreasing treatment are preferable. Pretreatment can also be carried out simply by buffing or filing.

From the viewpoint of more sufficient adhesion, it is preferable that a pretreatment site is one of a reinforcing cord layer and a tire frame.

Here, as a pretreatment, a treatment with an adhesive other than the resorcinol-formalin-latex-based adhesive (undercoat treatment) may be performed. An undercoat treatment agent used for the undercoat treatment is not particularly limited as long as it is used when a resin member is adhered to a rubber member more sufficiently by an RFL-based adhesive, and examples thereof include an undercoat composition including a water-soluble polymer containing an epoxy compound and an isocyanate compound described in JP-ANo. 2009-191395, an undercoat composition including a copolymer of an alkylated bisphenol and acrylic (methacrylic) acid described in Domestic re-publication of PCT International Publication No. 02-094962, and an undercoat composition containing a vinyl chloride plastisol-based polymer described in JP-ANo. H11-001658. The undercoat treatment agent and the resorcinol-formalin-latex-based adhesive may be mixed in the course of application.

The layer thickness of the undercoat layer formed by the undercoat treatment agent is preferably from 1 µm to 15 µm.

By setting the surface roughness of the tire frame to a certain range, the adhesive strength after adhesion can be further enhanced. As the surface roughness of the tire frame, for example, the arithmetic average roughness (Ra) is preferably 0.1 µm or more. In a case in which the surface roughness is 0.1 µm or more, the adhesion area of the tire frame in contact with the RFL-based adhesive increases, so that more sufficient adhesion can be attained. From the viewpoint of further reducing dripping of the RFL-based adhesive, Ra is preferably 0.5 µm or more, and more preferably 1 µm or more. From the viewpoint of enhancing the balance between the durability of the tire frame and the adhesive strength, Ra is preferably smaller than 20 µm, and more preferably 12 µm or less.

Examples of a method for applying the RFL-based adhesive include a spray coating method, a brush coating method, a dipping method, a bar coating method, a kneader coating method, a curtain coating method, a roller coating method, and a spin coating method.

The adhesive strength can be obtained by preparing a test piece in which each member of the tire is adhered using an RFL-based adhesive and by a method in accordance with JIS-K6854-3: (1999). As a test method, the adhesive strength (kN/m) can be obtained by conducting a peeling test by using a test piece obtained by adhering both sides of a rubber piece so that it is sandwiched between two resin pieces with an RFL-based adhesive, instead of using a sample having a structure in which a rubber piece corresponding to a rubber member and a resin piece corresponding to a resin member are simply adhered with an RFL-based adhesive and superimposed as a test piece. By visually observing the test piece after the peeling test, a location where the fracture or peeling has occurred can be confirmed. From the viewpoint of imparting a good adhesive force, it is preferable that the adhesive is 20 kN/m or more. In a case in which sufficient adhesive strength is obtained, cohesive failure occurs, thereby suppressing interfacial peeling.

When the tire frame and the unvulcanized rubber member are adhered using the RFL-based adhesive, it is preferable to further perform a vulcanization treatment. The vulcanization treatment in this case may be carried out by a known method, and examples thereof include methods described in JP-ANo. H11-048264, JP-ANo. H11-029658, and JP-A No. 2003-238744. Vulcanization of rubber can be carried out by appropriately adding a reinforcing material such as carbon black, a filler, a vulcanizing agent, a vulcanization accelerator, a fatty acid or salts thereof, a metal oxide, a process oil, an antioxidant, or the like to the unvulcanized rubber, kneading the mixture using a BANBURY mixer, and then heating the resultant.

### Reinforcing Cord Layer

The tire according to an embodiment of the disclosure may include a reinforcing cord member and a resin material that are wound in the circumferential direction on the outer circumference of the tire frame to form a reinforcing cord layer. Here, the resin material preferably contains the polyamide-based thermoplastic resin. Further, among them, a polyamide-based thermoplastic elastomer (TPA) as defined in JIS K6418: 2007 is preferable. In the following, a resin material containing the polyamide-based thermoplastic resin may be referred to as a polyamide-based thermoplastic resin material.

As described above, in a case in which the reinforcing cord layer contains the polyamide-based thermoplastic resin material, not only the adhesion of the reinforcing cord layer and the rubber member with the RFL-based adhesive is improved but also the difference in hardness between the tire and the reinforcing cord layer can be reduced as compared with a case in which the reinforcing cord is fixed with a rubber member (cushion rubber), and therefore, the reinforcing cord member can be closely adhered and fixed to the tire frame.

Further, in a case in which the reinforcing cord is a steel cord, and in which an attempt is made to separate the reinforcing cord from the cushion rubber at the time of disposal of the tire, vulcanized rubbers are difficult to separate from the reinforcing cord only by heating. In contrast, in the case of a polyamide-based thermoplastic resin material, the reinforcing cord can be separated only by heating. For this reason, there is an is advantage in terms of recyclability of the tire in a case in which the reinforcing cord is a polyamide-based thermoplastic resin material. Resin materials usually have a loss factor (Tan δ) lower than that of vulcanized rubbers. Accordingly, when the reinforcing cord layer contains a large amount of a resin material, the rolling properties of the tire can be improved. Further, polyamide-based thermoplastic resin materials having a relatively high elastic modulus as compared with vulcanized rubbers are advantageous in that the polyamide-based thermoplastic resin materials have high in-plane shear stiffness, and also provide excellent steering stability and excellent abrasion resistance at the time of traveling with the tire.

The elastic modulus (the tensile modulus of elasticity as defined in JIS K7113: 1995) of the polyamide-based thermoplastic resin material used in the reinforcing cord layer is preferably set within a range of from 0.1 times to 10 times the elastic modulus of the thermoplastic resin forming a tire frame. In a case in which the elastic modulus of the polyamide-based thermoplastic resin material is not more than 10 times the elastic modulus of the polyamide-based thermoplastic resin material forming the tire frame, the crown portion does not become too hard, facilitating the rim assembling property. In a case in which the elastic modulus of the polyamide-based thermoplastic resin material is 0.1 times or more the elastic modulus of the thermoplastic resin material forming the tire frame, a resin constituting the reinforcing cord layer is not too soft, the in-plane shear stiffness of the belt is high, and cornering power is improved.

In a case in which a polyamide-based thermoplastic resin material is included in the reinforcing cord layer, from the viewpoint of increasing pull-out property of a reinforcing cord (difficulty to pull out), the surface of the reinforcing cord member is preferably coated with a polyamide-based thermoplastic resin material by 20% or more, and more preferably, the surface is coated by 50% or more. The content of the polyamide-based thermoplastic resin material in the reinforcing cord layer is preferably 20% by mass or more, and more preferably 50% by mass or more, from the viewpoint of enhancing the extractability of the reinforcing cord with respect to the total amount of the materials constituting the reinforcing cord layer excluding the reinforcing cord.

In order to configure the reinforcing cord layer to include the resin material, for example, the reinforcing cord layer can be formed to be configured such that at least a part of a reinforcing cord member is embedded in the outer circumference of a tire frame formed of a polyamide-based thermoplastic resin material in a cross sectional view along the axial direction of the tire frame. In this case, the resin material including the polyamide-based thermoplastic resin at the outer circumference of the tire frame in which the reinforcing cord member is embedded corresponds to the resin material constituting the reinforcing cord layer, and the reinforcing cord layer is constituted by the polyamide-based thermoplastic resin material forming the tire frame and the reinforcing cord member. In a case in which the reinforcing cord layer is configured to contain a resin material, a coated cord member in which a reinforcing cord is coated with the same kind of resin material as or a different resin material from the resin material forming the tire frame may be wound in the circumferential direction of the tire frame. The same kind of resin material means a form such as amide-based resins, urethane-based resins, or styrene-based resins.

### < First Embodiment >

In the following, tires according to first and second embodiments are described with reference to the drawings. In the first and second embodiments, a tire frame is referred to as a tire case.

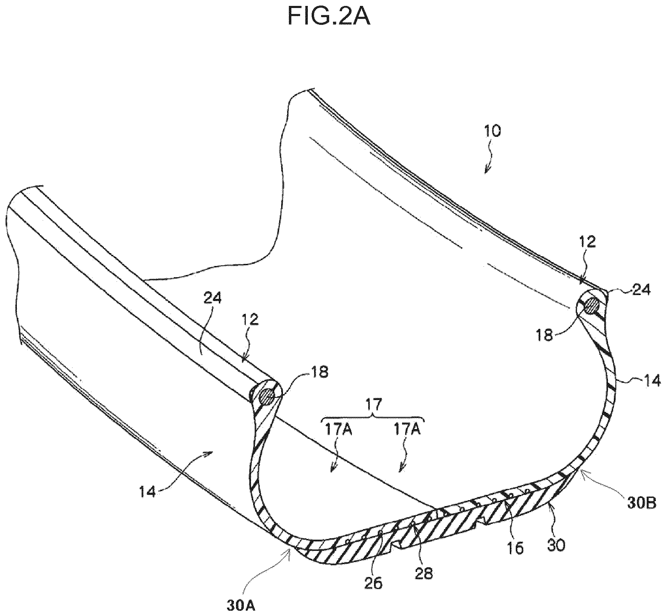

A tire 10 of the first embodiment is described. Fig. 2A is a perspective view illustrating a cross section of a part of a tire according to an embodiment of the invention.

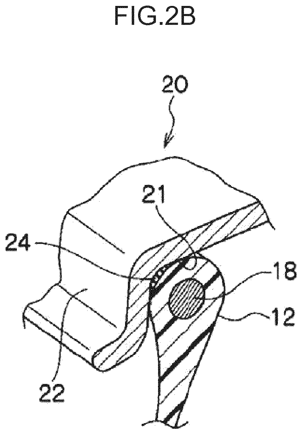

Fig. 2B is a cross-sectional view of a bead portion fitted to a rim. As illustrated in Figs. 2A and 2B, the tire 10 according to the first embodiment has substantially the same cross-sectional shape as those of conventional ordinary rubber pneumatic tires.

As illustrated in Fig. 2A, the tire 10 includes a tire case 17 composed of a pair of bead portions 12 contacting a bead seat 21 and a rim flange 22 of a rim 20 illustrated in Fig. 2B, side portions 14 each extending outwardly from the bead portion 12 in the tire radial direction, and a crown portion 16 (outer circumference) connecting the outer end in the tire radial direction of one of the side portions 14 and the outer end in the tire radial direction of the other of the side portions 14. An RFL layer is located between the crown portion 16 (outer circumference) and a tread 30 which is a rubber member as illustrated in Fig. 2A, and is formed in a range from 30A to 30B along the outer periphery of the crown portion 16. When a rubber member is further provided on the outer circumference of the side portions 14, the RFL layer may be formed between the rubber member and the side portions 14. Further, the RFL layer may have a different layer thickness depending on the location, such as increasing the thickness at the portion where the reinforcing cord 26 is present and decreasing the thickness at the portion close to the side portions 14.

In the first embodiment, the tire case 17 is formed of a single resin material, i.e., the polyamide-based thermoplastic resin material. However, the invention is not limited to this configuration, and thermoplastic resin materials having different properties may be used for the respective parts of the tire case 17 (for example, the side portions 14, the crown portion 16, and the bead portions 12), similar to conventional ordinary rubber pneumatic tires. Further, a reinforcing member (for example, a polymer or metal fiber, cord, non-woven fabric, or woven fabric) may be embedded in the tire case 17 (for example, in the bead portions 12, in the side portions 14, or in the crown portion 16), so as to reinforce the tire case 17 with the reinforcing member. Specifically, the polyamide-based thermoplastic resin material (polyamide-based thermoplastic elastomer, TPA) used for the tire case 17 can be prepared as follows, for example.

First, in a 50-liter pressure vessel equipped with a stirrer, a thermometer, a torque meter, a pressure gauge, a nitrogen gas inlet, a pressure regulator, and a polymer outlet, 11.24 kg of 12-aminododecanoic acid, 3.21 kg of ABA type triblock polyether diamine (XTJ-542, manufactured by HUNTSMAN Corporation), and 0.67 kg of adipic acid are added.

Next, after sufficiently replacing the inside of the pressure vessel with nitrogen, the pressure inside the pressure vessel is adjusted to 0.05 MPa while further supplying nitrogen gas, and the temperature is raised from room temperature to 240°C. Thereafter, a polymerization reaction is carried out at 240°C for 2 hours while maintaining the pressure inside the pressure vessel at 0.05 MPa.

After the polymerization reaction, the flow rate of the nitrogen gas is lowered, the interior of the vessel is evacuated with a vacuum pump, and polymerization is carried out at 240°C for 5.5 hours to obtain a polyamide-based thermoplastic elastomer (TPA).

The tire case 17 according to the first embodiment is a member obtained by joining together a pair of tire case half parts (tire case pieces) 17A formed of a resin material. Each tire case half part 17A is formed by producing an integrated body composed of one bead portion 12, one side portion 14, and a half-width part of the crown portion 16 by molding such as injection molding. The tire case 17 is formed by disposing the formed tire case half parts 17A, which have the same annular shape, to face to each other, and joining them together at the tire equatorial plane. The tire case 17 is not limited to those obtained by joining together two members, and may be formed by joining together three or more members.

Each of the tire case half parts 17A formed using the above-described resin material may be shaped by, for example, vacuum molding, pressure forming, injection molding, or melt casting. Therefore, vulcanization is unnecessary, the production process can greatly be simplified, and the forming time can be saved, as compared to the case of forming a tire case with rubber as in conventional techniques.

In the first embodiment, the tire case half parts 17A have a bilaterally symmetric shape, i.e., one of the tire case half parts 17A has the same shape as the other tire case half part 17A. Therefore, there is also an advantage in that only one type of mold is required for shaping the tire case half parts 17A.

In the first embodiment, an annular bead core 18 made of a steel cord similar to those used in conventional ordinary pneumatic tires is embedded in each of the bead portions 12, as illustrated in Fig. 2B.

In the first embodiment, an annular sealing layer 24 formed of a material (for example, rubber) having a higher sealing property than that of the resin material for forming the tire case 17 is provided on a part of the bead portions 12 that contacts the rim 20 or at least on a part of the bead portions 12 that contacts the rim flange 22 of the rim 20. The sealing layer 24 may also be provided in a part in which the tire case 17 (the bead portions 12) and the bead seat 21 contact each other. As the material having a higher sealing property than that of the resin material for forming the tire case 17A, a material softer than the resin for forming the tire case 17 may be used. As rubbers usable for the sealing layer 24, the same types of rubbers as the rubbers used on the outer surfaces of the bead portions of conventional ordinary pneumatic rubber tires are preferably used. Another thermoplastic resin (thermoplastic elastomer) having a higher sealing property than that of the resin material may be used. Examples of another thermoplastic resin include a polyurethane-based resin, a polyolefin-based resin, a polystyrene-based thermoplastic resin, or a polyester resin, or a blend of any of these resins with a rubber or an elastomer. It is also possible to use a thermoplastic elastomer, such as a polyester-based thermoplastic elastomer, a polyurethane-based thermoplastic elastomer, a polystyrene-based thermoplastic elastomer, a polyolefin-based thermoplastic elastomer, or a combination of two or more of these elastomers or a blend of any of these elastomers with a rubber.

As illustrated in Fig. 2A, the reinforcing cord 26 having a higher rigidity than that of the resin material for forming the tire case 17 is wound around the crown portion 16 in the circumferential direction of the tire case 17. The reinforcing cord 26 is helically wound to form a reinforcing cord layer 28 in a state in which at least a part of the reinforcing cord 26 is embedded in the crown portion 16 in cross-sectional view taken along the axial direction of tire case 17. The tread 30 formed of a material (for example, rubber) having a higher abrasion resistance than that of the resin material for forming the tire case 17 is disposed at the tire-radial-direction outer circumferential side of the reinforcing cord layer 28.

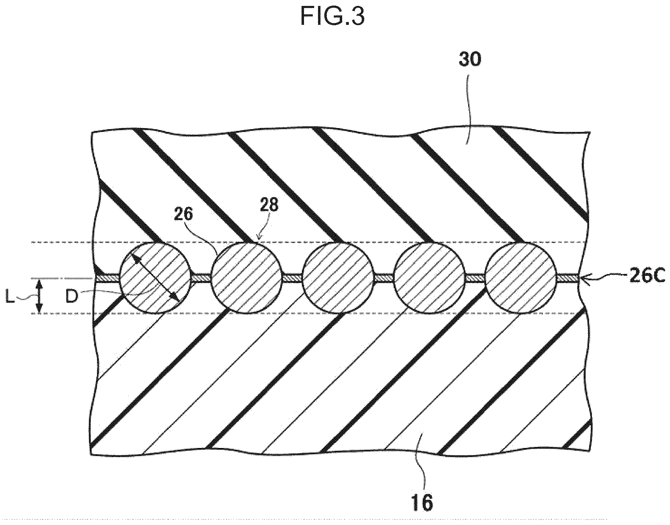

The reinforcing cord layer 28 formed by the reinforcing cord 26 is described below with reference to Fig. 3. Fig. 3 is a cross-sectional view taken along the tire rotation axis, which illustrates a state in which the reinforcing cord is embedded in the crown portion of the tire case of the tire according to the first embodiment. The tread 30 is adhered to the crown portion 16 via the RFL layer 26C. As illustrated in Fig. 3, the reinforcing cord 26 is helically wound in a state in which at least a part of the reinforcing cord 26 is embedded in the crown portion 16 in a cross-sectional view taken along the axial direction of the tire case 17, and, together with a part of the outer circumferential portion of the tire case 17, forms the reinforcing cord layer 28 indicated by the intermittent lines in Fig. 3. The part of the reinforcing cord 26 that is embedded in the crown portion 16 is in close contact with the resin material that forms the crown portion 16 (the tire case 17). As the reinforcing cord 26A, a monofilament (single filament) of a metal fiber, an organic fiber, or the like, or a multifilament (stranded filament) in which such fibers are stranded, such as a steel cord composed of stranded steel fibers, may be used. In the first embodiment, a steel cord is used as the reinforcing cord 26.

The depth L of embedding in Fig. 3 illustrates the depth of embedding of the reinforcing cord 26 in the tire case 17 (the crown portion 16) along the tire rotation axis direction. The depth L of embedding of the reinforcing cord 26 in the crown portion 16 is preferably equal to or greater than 1/5 of the diameter D of the reinforcing cord 26, and more preferably more than 1/2 of the diameter D of the reinforcing cord 26. It is more preferable that the entire reinforcing cord 26 is embedded in the crown portion 16. In a case in which the depth L of embedding of the reinforcing cord 26 is more than 1/2 of the diameter D of the reinforcing cord 26, the reinforcing cord 26 is difficult to drop off from the embedded portion due to the dimensions of the reinforcing cord 26. In a case in which the entire reinforcing cord 26 is embedded in the crown portion 16, the surface (the outer circumferential surface) becomes flat, whereby entry of air into an area around the reinforcing cord can be reduced even when a member is placed on the crown portion 16 in which the reinforcing cord 26 is embedded. The reinforcing cord layer 28 corresponds to a belt disposed on the outer circumferential surface of a carcass of a conventional pneumatic rubber tire.

As described above, the tread 30 is disposed on the tire-radial-direction outer circumferential side of the reinforcing cord layer 28. It is preferable that the same type of rubber as that used for conventional pneumatic rubber tires is used as the rubber used for the tread 30. In the tread 30, a tread pattern composed of plural grooves is formed on the contact surface that comes into contact with a road surface, similar to conventional pneumatic rubber tires.

A method of producing a tire according the first embodiment is described below.

### Tire Case Forming Process

First, tire case half parts supported by thin metal support rings are aligned to face each other. Subsequently, a joining mold (not illustrated in the drawings) is placed so as to contact the outer circumferential surface of a butt portion of the tire case half parts. The joining mold is configured to pressurize a region at or around the joint portion (the butt portion) of the tire case half parts 17A with a predetermined pressure. Then, the pressure is applied to the region at or around the joint portion of the tire case half parts at a temperature equal to or higher than the melting point (or softening point) of the thermoplastic resin material that forms the tire case. When the joint portion of the tire case half parts is heated and pressurized by the joining mold, the joint portion is melted, and the tire case half parts are fused with each other, as a result of which the members are integrated to form the tire case 17. Although joint portion of the tire case half parts is heated using the joining mold in the first embodiment, the invention is not limited thereto; heating of the joint portion may be carried out using, for example, a separately provided high frequency heater, or the tire case half parts may be bonded by softening or melting the joint portion, in advance, via application of hot air, irradiation with infrared radiation, or the like, and applying a pressure to the joint portion using the jointing mold.

### Reinforcing Cord Member Winding Process

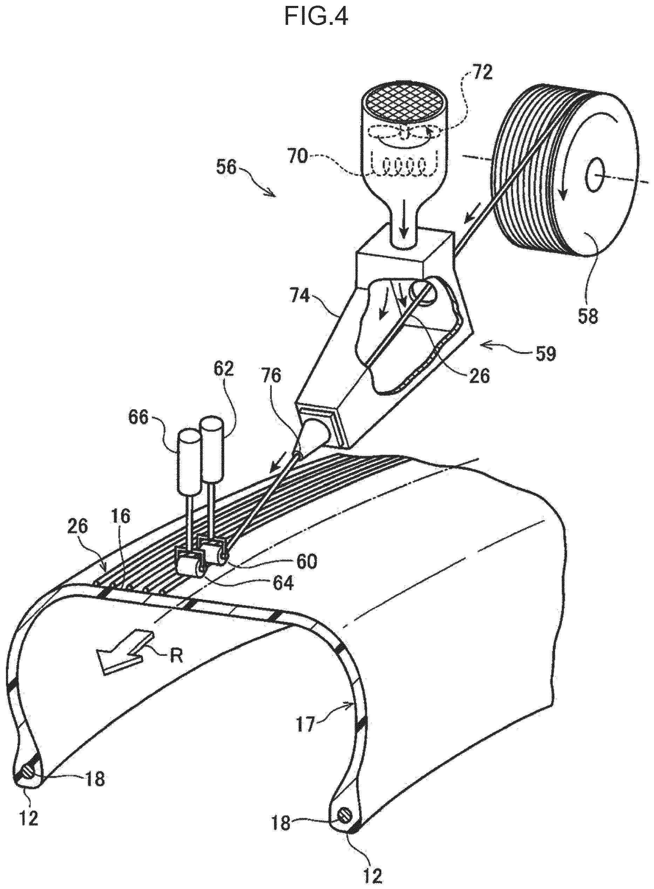

Next, a reinforcing cord winding process is described below with reference to Fig.4. Fig. 4 is an explanatory diagram explaining an operation of embedding the reinforcing cord in the crown portion of the tire case using a cord heating device and rollers. In Fig. 4, a cord feeding apparatus 56 includes a reel 58 on which a reinforcing cord 26 is wound, a cord heating device 59 disposed at the downstream side in the cord feeding direction of the reel 58, a first roller 60 disposed at the downstream side in the reinforcing cord 26 feeding direction, a first cylinder unit 62 for moving the first roller 60 in directions in which the first roller comes into contact with and get away from the outer circumferential surface of the tire, a second roller 64 disposed at the downstream side in the reinforcing cord 26 feeding direction of the first roller 60, and a second cylinder unit 66 for moving the second roller 64 in directions in which the second roller comes into contact with and get away from the outer circumferential surface of the tire. The second roller 64 can be used as a cooling roller formed of metal. In the first embodiment, the surface of the first roller 60 or the second roller 64 is coated with a fluororesin (TEFLON (registered trademark) in the case of the first embodiment) with a view to suppressing adhesion of the melted or softened thermoplastic resin material. Although the cord feeding apparatus 56 is configured to have two rollers of the first roller 60 and the second roller 64 in the present embodiment, the invention is not limited to this configuration, and the cord feeding apparatus may be configured to have only one of these rollers (that is, a single roller).

The cord heating device 59 includes a heater 70 and a fan 72 that generate hot air. The cord heating device 59 includes a heating box 74 into which hot air is supplied and in which the reinforcing cord 26 passes through the inside space thereof, and an discharge port 76 through which the heated reinforcing cord 26 is discharged.

In this process, first, the temperature of the heater 70 of the cord heating device 59 is increased, and the air around the heater 70 heated by the heater 70 is sent to the heating box 74 by an air current generated by the rotation of the fan 72. Then, the reinforcing cord 26 drawn out from the reel 58 is fed to the inside of the heating box 74 of which the inner space is heated with hot air, whereby the reinforcing cord 26 is heated (for example, to increase the temperature of the reinforcing cord 26 to be about 100°C to about 200°C). The heated reinforcing cord 26 passes through the discharge port 76, and is helically wound, with a constant tension, around the outer circumferential surface of the crown portion 16 of the tire case 17 rotating in the direction of arrow R in Fig. 4. Here, as a result of the heated reinforcing cord 26 coming into contact with the outer circumferential surface of the crown portion 16, the resin material at the contact portion is melted or softened, and at least a part of the heated reinforcing cord 26 is embedded in the outer circumferential surface of the crown portion 16. In this process, since the heated reinforcing cord 26 is embedded in the melted or softened resin material, the resin material and the reinforcing cord 26 get into a state in which no space is left therebetween, that is, in a tightly-contacted state. Accordingly, entry of air into the portion in which the reinforcing cord 26 is embedded is suppressed. By heating the reinforcing cord 26 to a temperature higher than the melting point of the resin material of the tire case 17, the melting or softening of the resin material in the portion contacting the reinforcing cord 26 is promoted. By employing this configuration, embedding of the reinforcing cord 26 in the outer circumferential surface of the crown portion 16 is facilitated, and entry of air can effectively be reduced.

The depth L of embedding of the reinforcing cord 26 can be adjusted by the heating temperature for the reinforcing cord 26, the tension applied to the reinforcing cord 26, the pressure applied from the first roller 60, or the like. In the first embodiment, the depth L of embedding of the reinforcing cord 26 is set to be equal to or greater than 1/5 of the diameter D of the reinforcing cord 26. The depth L of embedding of the reinforcing cord 26 is more preferably more than 1/2 of the diameter D, and it is still more preferable that the entire reinforcing cord 26 is embedded.

In this way, a reinforcing cord layer 28 is formed on the outer circumference side of the crown portion 16 of the tire case 17 by winding the heated reinforcing cord 26 on the outer circumferential surface of the crown portion 16 such that the heated reinforcing cord 26 is embedded in the outer circumferential surface of the crown portion 16.

Subsequently, an RFL-based adhesive is applied to a surface of the crown portion 16 of the tire case 17 at which a tread 30 contacts with the crown portion 16. In the application, a commonly used application or coating method or apparatus can be used without particular limitation, and specific examples thereof include knife coating, bar coating, gravure coating, spray coating, and immersion coating. Among these, knife coating, bar coating, and gravure coating are preferable in terms of uniform application of an adhesive and coating.

A belt-shaped tread 30 which is a unvulcanized rubber member is wound on the outer circumferential surface of the tire case 17 for one revolution, and the tread 30 is bonded to the outer circumferential surface of the tire case 17 using an RFL-based adhesive. For example, precured crowns known thus far for use in retreaded tires may be used as the tread 30. This process is a similar process to that of bonding a precured crown to the outer circumferential surface of a casing of a retreaded tire.

### Vulcanization Process

Next, the tire case 17 to which the tread 30 is bonded is housed in a vulcanization can or mold and vulcanized. By performing vulcanization, a chemical bond between the latex rubber of the RFL-based adhesive and the diene-based rubber is newly formed, and as a result, the connection between the tread 30 which is a rubber member and the tire case which is a resin member becomes stronger.

A tire 200 can be completed by bonding a sealing layer 24 formed of a soft material softer than the resin material to the bead portion 12 of the tire case 17 using, for example, an adhesive.

A tire 10 can be completed by bonding a sealing layer 24 formed of a vulcanized rubber to the bead portion 12 of the tire case 17 using, for example, an adhesive.

After completion of the tire 10, an annealing treatment for heating the tire 10 may be further performed. By performing the annealing treatment after completion of the tire, the degree of crystallization of a hard segment of the polyamide-based thermoplastic elastomer contained in the resin material can also be adjusted. The heating temperature in the annealing treatment is preferably from the glass transition temperature to 140°C, and more preferably from 50°C to 140°C. It is preferable to gradually cool down to room temperature (for example 25°C) after heating the tire 10.

### Effects

The tire 10 of the first embodiment has excellent peeling resistance, as well as excellent impact resistance and rupture resistance, since the tire case 17 is formed of the polyamide-based thermoplastic resin material and the tire case 17 and the tread 30 (rubber member) are bonded using the RFL-based adhesive. In addition, since the tire structure can be simplified, the tire of the first embodiment is lighter in weight than a tire using a tire case formed of conventional rubber. Therefore, when the tire 10 of the first embodiment is applied to an automobile, the tire has excellent durability. Since the weight of the tire can be reduced, the fuel efficiency of an automobile using such a tire can be improved.

Furthermore, the polyamide-based thermoplastic elastomer has high adhesiveness to the reinforcing cord 26, and also exhibits excellent fixing performance such as welding strength. Therefore, the phenomenon in which air remains in the surroundings of the reinforcing cord 26 in the reinforcing cord winding process (entry of air) can be suppressed in particular. In a case in which adhesiveness and welding properties to the reinforcing cord 26 are high, and entry of air into the surroundings of the reinforcing cord member is suppressed, the displacement of the reinforcing cord 26, for example, due to applied force during running can be effectively suppressed. As a result, for example, even in a case in which a tire component member is disposed so as to cover the entirety of the reinforcing cord member in the outer circumference of the tire frame, the displacement of the reinforcing cord member is suppressed. As a result, abrasion and damage of these members (including the tire frame) are reduced, resulting in the improvement in durability of the tire 10.

In the tire 10 according to the first embodiment, the reinforcing cord 26 having higher stiffness than the polyamide-based thermoplastic resin material is helically wound in the circumferential direction around the outer circumferential surface of the crown portion 16 of the tire case 17 made of the polyamide-based thermoplastic resin material, whereby puncture resistance, cut resistance, and stiffness in the circumferential direction of the tire 10 are improved. The improvement in stiffness in the circumferential direction of tire 10 prevents the creeping of the tire case 17 made of the polyamide-based thermoplastic resin material.

Furthermore, since at least a part of the reinforcing cord 26 is embedded in the outer circumferential surface of the crown portion 16 of the tire case 17 formed from the polyamide-based thermoplastic resin material and is closely adhered to the surrounding polyamide-based thermoplastic resin material in the cross-sectional view taken along the axial direction of the tire case 17 (the cross-section illustrated in Fig. 3), entry of air during production is reduced, and the displacement of the reinforcing cord 26, for example, due to applied force during running is reduced. As a result, for example, abrasion of the reinforcing cord 26, the tire case 17, and the tread 30 is reduced, resulting in the improvement in durability of the tire 10.

Furthermore, since the depth L of embedding of the reinforcing cord 26 is 1/5 or more of the diameter D as illustrated in Fig. 3, entry of air during production is efficiently reduced, and the displacement of the reinforcing cord 26, for example, due to applied force during running is further suppressed.

In a case in which the reinforcing cord layer 28 contains the polyamide-based thermoplastic resin material, the difference in hardness between the tire case 17 and the reinforcing cord layer 28 can be reduced as compared with a case in which the reinforcing cord 26 is fixed with a cushion rubber, and therefore the reinforcing cord 26 can be closely adhered and fixed to the tire case 17. As a result, entry of air as described above is efficiently reduced, and the displacement of the reinforcing cord member during running is further suppressed.

In a case in which the reinforcing cord is a steel cord, the reinforcing cord 26 can easily be separated from the polyamide-based thermoplastic resin material by heating and recovered at the time of disposing of the tire, and, therefore, there is an advantage from the viewpoint of recyclability of the tire 10. Resin materials usually have a loss factor (tan δ) lower than that of vulcanized rubbers. Accordingly, when the reinforcing cord layer contains a large amount of resin materials, the rolling properties of the tire can be enhanced. Resin materials, having a higher elastic modulus relative to vulcanized rubbers, are advantageous in that the resin materials have high in-plane shear stiffness, and also provide excellent steering stability and excellent abrasion resistance at the time of traveling with the tire.

Since the tread 30 that comes into contact with a road surface is formed of a rubber material having higher abrasion resistance than that of the polyamide-based thermoplastic resin material, the abrasion resistance of the tire 10 is improved.

Since the annular bead core 18 formed of a metal material is embedded in the bead portion 12, the tire case 17 is strongly fixed to the rim 20, i.e., the tire 10 is strongly fixed to the rim 20, similarly to conventional rubber pneumatic tires.

Since the sealing layer 24 formed of a rubber material having higher sealing property than that of the polyamide-based thermoplastic resin material is disposed in a region of the bead portion 12 that contacts the rim 20, sealing property between the tire 10 and the rim 20 is improved. Therefore, the air leaking within the tire is further reduced, as compared to a case in which the tire is sealed only with the rim 20 and the polyamide-based thermoplastic resin material. Further, the installation of the sealing layer 24 also improves the fittability to a rim.

Although the first embodiment is configured such that the reinforcing cord 26 is heated to melt or soften the polyamide-based thermoplastic resin material in a portion that contacts the heated reinforcing cord 26, the invention is not limited to this configuration. An embodiment in which a hot air generating apparatus is used, instead of heating the reinforcing cord 26, to heat the outer circumferential surface of the crown portion 16 into which the reinforcing cord 26 is to be embedded, and then the reinforcing cord 26 is embedded in the crown portion 16 may be employed.

Although the first embodiment is configured such that the heat source of the cord heating device 59 includes the heater and the fan, the invention is not limited to this configuration. An embodiment in which the reinforcing cord 26 is directly heated by radiation heat (for example, infrared rays) may be employed.

Although the first embodiment is configured such that a region at which the polyamide-based thermoplastic resin material with the reinforcing cord 26 embedded therein is melted or softened is forcibly cooled with the second roller 64 formed of metal. However, the invention is not limited to this configuration, and an embodiment in which the region at which the thermoplastic resin material is melted or softened may be forcibly cooled and solidified by directly applying cold air thereto may be employed.

Although the first embodiment is configured such that the reinforcing cord 26 is heated, an embodiment in which the outer circumference of the reinforcing cord 26 is covered, for example, using the same polyamide-based thermoplastic resin material as the tire case 17 may be employed. In this case, the covering polyamide-based thermoplastic resin material is heated together with the reinforcing cord 26 when the covered reinforcing cord is wound around the crown portion 16 of the tire case 17, whereby entry of air during the embedment of the reinforcing cord into the crown portion 16 can be efficiently reduced.

The reinforcing cord 26 is helically wound from the easiness in production. However, the reinforcing cord 26 may be wound in another method in which the reinforcing cord 26 is discontinuous in the width direction of the tire.

Although the tire 10 according to the first embodiment is a so-called tubeless tire in which an air room is formed between the tire 10 and the rim 20 by mounting the bead portion 12 on the rim 20, the invention is not limited to this configuration, and the tire may have a complete tube shape.

Although modes for carrying out the invention are described above with reference to embodiments for the purpose of illustration, various modifications may be made therein within out departing from the scope of the claims. It is to be understood that the protection scope of the invention is not limited to these embodiments, and is defined by scope of the claims.

### < Second Embodiment >

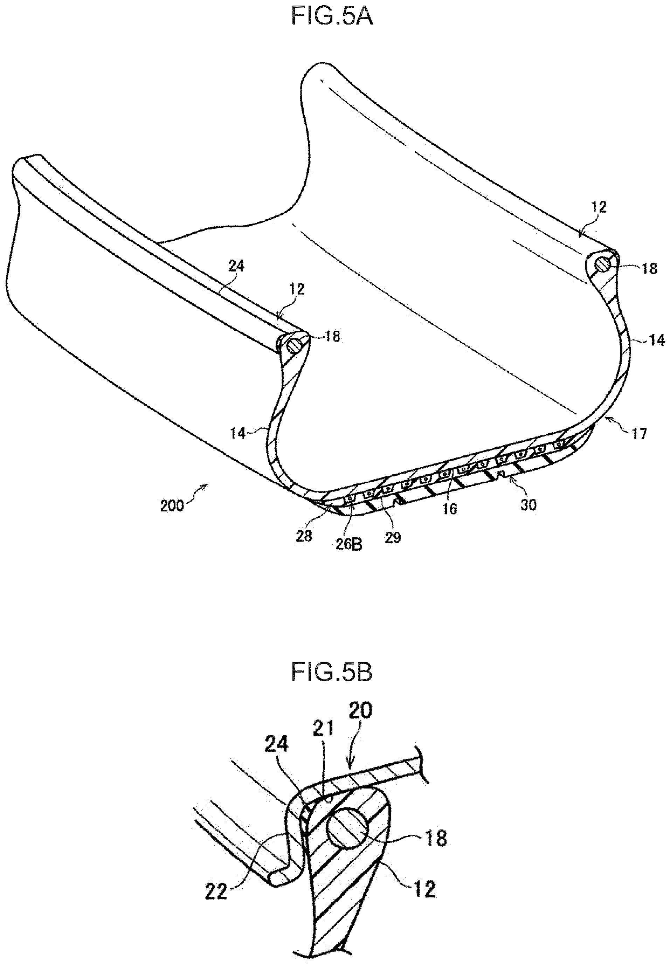

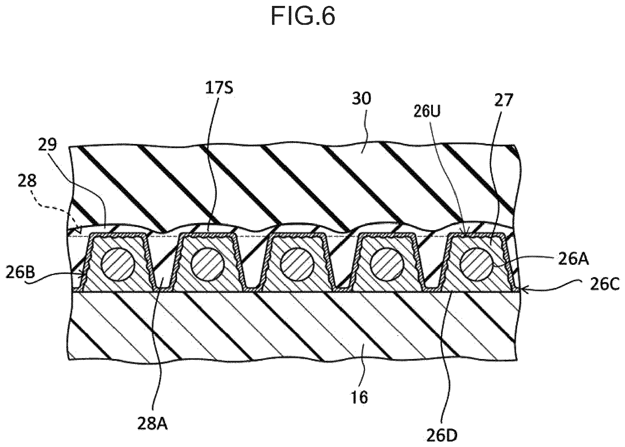

In the following, a method of producing a tire according to an embodiment of the disclosure and a tire according to a second embodiment of the disclosure are described below with reference to the drawings. Similarly to the first embodiment, the tire according to the second embodiment has substantially the same cross-sectional shape as those of conventional general rubber pneumatic tires. Accordingly, in the following drawings, the same elements as those described in the first embodiment are designated by the same reference numerals. Fig. 5A is a cross-sectional view of the tire according to the second embodiment taken along the tire width direction, and Fig. 5B is an enlarged cross-sectional view of a bead portion taken along the tire width direction in a state in which a rim is fitted to the tire according to the second embodiment. Fig. 6 is a cross-sectional view taken along the tire width direction, which illustrates a region around a reinforcing cord layer of the tire according to the second embodiment.

Similarly to the first embodiment, a tire case 17 of the tire according to the second embodiment is formed of a polyamide-based thermoplastic elastomer (TPA). In a tire 200 according to the second embodiment, a reinforcing cord layer 28 (indicated by a dotted line in Fig. 6) in which a coated cord member 26B is wound in the circumferential direction is layered on a crown portion 16, as shown in Figs. 5A, 5B, and 6. The reinforcing cord layer 28 constitutes the outer circumferential portion of the tire case 17, and reinforces the rigidity in the circumferential direction of the crown portion 16. The outer circumferential surface of the reinforcing cord layer 28 contacts a cushion rubber 29 via an RFL layer 26C.

The coated cord member 26B is formed by coating a cord member 26A, that has higher rigidity than that of the polyamide-based thermoplastic elastomer that forms the tire case 17, with a coating polyamide-based thermoplastic resin material (hereinafter referred to as an "coating resin material") 27 that is an different member from the polyamide-based thermoplastic elastomer that forms the tire case 17. In regions in which the coated cord member 26B contacts the crown portion 16, the coated cord member 26B and the crown portion 16 are bonded to each other via the RFL layer 26C formed of an RFL-based adhesive.

The elastic modulus of the coating resin material 27 is preferably set within a range of from 0.1 times to 10 times the elastic modulus of the resin material forming the tire case 17. In a case in which the elastic modulus of the coating resin material 27 is not more than 10 times the elastic modulus of the polyamide-based thermoplastic resin material forming the tire case 17, the crown portion does not become too hard, facilitating the rim assembling property. In a case in which the elastic modulus of the coating resin material 27 is than 0.1 times or more the elastic modulus of the polyamide-based thermoplastic resin material forming the tire case 17, a resin constituting the reinforcing cord layer 28 is not too soft, and the in-plane shear stiffness of the belt is high, and cornering power is improved. In the second embodiment, a material ("UBESTA XPA9055X1" manufactured by Ube Industries, Ltd. in the second embodiment) similar to a polyamide-based thermoplastic resin material forming the tire case 17 is used as the coating resin material 27.

As shown in Fig. 6, the coated cord member 26B has a substantially trapezoidal cross-sectional shape. In the following description, the top surface (the outer surface in the tire radial direction) of the coated cord member 26B is designated by reference numeral 26U, and the bottom surface (the inner surface in the tire radial direction) is designated by reference numeral 26D. Although the second embodiment is configured such that the cross-sectional shape of the coated cord member 26B is substantially trapezoidal, the invention is not limited to this configuration. The cross-sectional shape of the coated cord member 26B may be any shape other than a shape in which the width increases from the bottom surface 26D side (the inner side in the tire radial direction) to the top surface 26U side (the outer side in the tire radial direction).

As shown in Fig. 6, since plural coated cord members 26B are arranged with intervals in the circumferential direction, gaps 28A are formed between adjacent coated cord members 26B. Accordingly, the outer circumferential surface of the reinforcing cord layer 28 has irregularities, and the outer circumferential surface 17S of the tire case 17 of which the outer circumferential portion is formed of the reinforcing cord layer 28 also has irregularities.

Minute roughening irregularities are uniformly formed on the outer circumferential surface 17S (including irregularities) of the tire case 17, and the cushion rubber 29 is bonded thereon via the RFL layer. The rubber portion at the inner side in the radial direction of the cushion rubber 29 has flowed into the roughening irregularities.

A tread 30 formed of a material, such as rubber, having higher abrasion resistance than that of the resin material forming the tire case 17 is bonded onto the cushion rubber 29 (onto the outer circumferential surface of the cushion rubber 29).

The rubber to be used in the tread 30 is preferably rubber similar to those used in the conventional rubber pneumatic tires. A tread formed of another kind of resin material having higher abrasion resistance than that of the resin material forming the tire case 17 may be used instead of the tread 30. In the tread 30, a tread pattern (not shown in the drawings) composed of plural grooves is formed on the contact surface that comes into contact with a road surface, similar to conventional pneumatic rubber tires.

Although modes for carrying out the invention are described above with reference to embodiments for the purpose of illustration, various modifications may be made therein within out departing from the scope of the claims. It is to be understood that the protection scope of the invention is not limited to these embodiments, and is defined by the scope of the claims.

In the following, a method of producing a tire according to the second embodiment is described.

### Tire Case Forming Process

First, tire case half parts 17A are formed in the same manner as in the first embodiment, and the tire case half parts are heated and pressurized using a mold for bonding, thereby forming a tire case 17.

### Reinforcing Cord Member Winding Process

In the second embodiment, a tire manufacturing apparatus similar to that in the first embodiment is used. When a reinforcing cord member is wound around the tire case 17, a cord feeding apparatus 56, that includes a reel 58 as illustrated in Fig. 4 on which a coated cord member 26B as illustrated in Fig. 6 having a substantially trapezoidal cross-sectional shape obtained by coating a cord member 26A with a coating resin material 27 (polyamide-based thermoplastic resin material) is wound around, is used.

First, the temperature of the heater 70 is increased, and the air around the heater 70 heated by the heater 70 is sent to the heating box 74 by an air current generated by the rotation of the fan 72. Then, the coated cord member 26B drawn out from the reel 58 is fed to the inside of the heating box 74 of which the inner space is heated with hot air, whereby the reinforcing cord member is heated (for example, to increase the temperature of the outer circumferential surface of the reinforcing cord member 26B to be equal to or higher than the melting point of the coating resin material 27). Here, as a result of the heating of the coated cord member 26B, the coating resin material 27 becomes melted or softened.

The coated cord member 26B passes through the discharge port 76, and is helically wound, with a constant tension, around the outer circumferential surface of the crown portion 16 of the tire case 17 rotating in a direction toward the bottom of the drawing. At this time, the bottom surface 26D of the coated cord member 26B comes into contact with the outer circumferential surface of the crown portion 16. The melted or softened coating resin material 27 at the contact portion spreads on the outer circumferential surface of the crown portion 16, and the coated cord member 26B is welded to the outer circumferential surface of the crown portion 16. Thereby, the bonding strength between the crown portion 16 and the coated cord member 26B is increased.

### Roughening Treatment Process

Subsequently, in a blasting apparatus not shown in the drawings, a blasting abrasive is shot at a high speed to the outer circumferential surface 17S of the tire case 17 while the tire case 17 is rotated. The blasting abrasive that has been shot collides with the outer circumferential surface 17S, thereby forming minute roughening irregularities with an arithmetic average roughness Ra of 0.05 mm or more on the outer circumferential surface 17S.

By forming minute roughening irregularities on the outer circumferential surface 17S of the tire case 17 in this manner, the outer circumferential surface 17S is made hydrophilic, and the wettability of the below-described adhesive is improved.

### Layer Formation Process

Subsequently, an RFL-based adhesive is applied to the outer circumferential surface 17S of the tire case 17 that has been subjected to the roughening treatment, thereby forming an RFL layer 26C.

A non-vulcanized cushion rubber 29 is wound, for one revolution, on the outer circumferential surface 17S to which the RFL-based adhesive has been applied, and an adhesive such as a rubber cement composition is applied onto the cushion rubber 29. A vulcanized or semi-vulcanized tread rubber 30 is wound thereon for one revolution, to become to be in the green tire case state.

### Vulcanization Process

Then, the green tire case is housed in a vulcanization can or a mold, and is vulcanized. In this recess, unvulcanized cushion rubber 29 flows into the RFL layer 26C, which have been formed on the outer circumferential surface 17S of the tire case 17 through the roughening treatment. Once the vulcanization is completed, a chemically cross-linked structure is formed between the RFL layer 26C and the cushion rubber 29 to increase the bonding strength. That is, the bonding strength between the tire case 17 and the tread 30 is enhanced due to the presence of the cushion rubber 29.

A tire 200 is completed by adhering a sealing layer 24 formed of a soft material softer than the resin material to the bead portion 12 of the tire case 17 by using an adhesive or the like.

### Effects

In the tire 200 according to the second embodiment, since the tire case 17 and the coated cord member 26B are adhered to the cushion rubber 29 via the RFL layer 26C, the tire frame and the coated cord member 26B, and the cushion rubber 29 and the tread 30 are sufficiently adhered. As a result, the durability or the like of the tire 200 can be improved. Although the second embodiment is configured such that the surface of the tire case 17 and the surface of the coated cord member 26B are coated with the RFL layer 26C, the invention is not limited to this configuration. The RFL layer 26C may be formed on only one of the surface of the tire case 17 and the surface of the coated cord member 26B.

The tire 200 according to the second embodiment, in which the tire case 17 is formed of the polyamide-based thermoplastic elastomer, has excellent heat resistance, excellent tensile modulus of elasticity, excellent tensile strength, and excellent fracture strain. In addition, the tire 200 according to the second embodiment is lighter in weight since it has a simple structure compared to those of conventional rubber tires. Therefore, the tire 200 according to the second embodiment has high abrasion resistance and high durability. The polyamide-based thermoplastic elastomer forming the tire case 17 has a melting point of 162°C. Thus, the tire case half parts 17A can be sufficiently bonded at, for example, about 250°C, and, therefore, energy consumption can be reduced, and the cost required for heating can be reduced.

In a case in which the reinforcing cord layer 28 contains the coated cord member 26B as described above, the difference in hardness between the tire case 17 and the reinforcing cord layer 28 can be reduced as compared with a case in which the reinforcing cord 26A is fixed simply with the cushion rubber 29, and therefore the coated cord member 26B can be further closely adhered and fixed to the tire case 17. As a result, entry of air as described above can be efficiently reduced, and the displacement of the reinforcing cord member during running can be further suppressed.

In a case in which the reinforcing cord 26A is a steel cord, the cord member 26A can easily be separated from the coated cord member 26B by heating and recovered at the time of disposing of the tire, and, therefore, there is an advantage from the viewpoint of recyclability of the tire 200. Further, since polyamide-based thermoplastic elastomers has a loss factor (tan δ) lower than that of vulcanized rubbers. Accordingly, when the reinforcing cord layer 28 contains a large amount of polyamide-based thermoplastic elastomers, the rolling properties of the tire can be enhanced. Polyamide-based thermoplastic elastomers, having a higher in-plane shear stiffness relative to vulcanized rubbers, are advantageous in that the polyamide-based thermoplastic elastomers provide excellent steering stability and excellent abrasion resistance at the time of traveling with the tire.

In the method for producing a tire according to the second embodiment, when the tire case 17, the cushion rubber 29, and the tread rubber 30 are integrated via the RFL layer 26C, the bonding properties (adhesion properties) is improved by the anchor effect since the outer circumferential surface 17S of the tire case 17 has been subjected to the roughening treatment. Further, since the resin material forming the tire case 17 is ploughed due to collision of the blasting abrasive, the wettability of the bonding agent is improved. Therefore, the adhesive is retained, in a uniformly applied state, on the outer circumferential surface 17S of the tire case 17, whereby the bonding strength between the tire case 17 and the cushion rubber 29 can be ensured.

Even in a configuration in which the outer circumferential surface 17S of the tire case 17 has irregularities, by allowing the blasting abrasive to collide with a recess (the gaps 28A), the area around the recess (walls at the recess, the bottom of the recess) is subjected to the roughening treatment, and thus the bonding strength between the tire case and the cushion rubber 29 may be ensured.

The cushion rubber 29 is superposed on the roughened area of the outer circumferential surface 17S of the tire case 17, whereby the bonding strength between the tire case 17 and the cushion rubber via the RFL layer 26C can be effectively ensured.

The reinforcing cord layer 28 constitutes the outer circumferential portion of the tire case 17, whereby puncture resistance and cutting resistance are improved, compared with a case in which a member other than the reinforcing cord layer 28 constitutes the outer circumferential portion.

The reinforcing cord layer 28 is formed by winding the coated cord member 26B, whereby the rigidity in the circumferential direction of the tire 200 is improved. In a case in which the rigidity in the circumferential direction is improved, creeping of the tire case 17 (a phenomenon in which the plastic deformation of the tire case 17 increases with lapse of time under a constant stress) is suppressed, and pressure resistance to air pressure applied from the inner side in the tire radial direction is improved.

Although the second embodiment is configured such that irregularities are formed on the outer circumferential surface 17S of the tire case 17, the invention is not limited to this configuration. An embodiment in which the outer circumferential surface 17S is formed flat may be employed.

In the tire case 17, a reinforcing cord layer may be formed by covering, with a coating polyamide-based thermoplastic material, the coated cord member that has been wound on the crown portion of the tire case and bonded thereto. In this case, a coating layer can be formed by ejecting the coating polyamide-based thermoplastic material in the melted or softened state onto the reinforcing cord layer 28. The coating layer may be formed without using an extruder, by heating a welding sheet into a melted or softened state, and attaching the welding sheet to the surface (the outer circumferential surface) of the reinforcing cord layer 28.

Although the second embodiment is configured such that case divided parts (tire case half parts 17A) are joined together to form the tire case 17, the disclosure is not limited to this configuration. The tire case 17 may be formed as an integrated body using, for example, a mold.

The tire 200 according to second embodiment is a so-called tubeless tire in which an air room is formed between the tire 200 and the rim 20 by mounting the bead portion 12 on the rim 20. However, the invention is not limited to this configuration, and the tire 200 may have, for example, a complete tube shape.

The cushion rubber 29 is interposed between the tire case 17 and the tread 30 in the second embodiment. However, the invention is not limited to this configuration, and an embodiment in which the cushion rubber 29 is not provided, that is, a layer configuration corresponding to one illustrated in Fig. 1C or IE, may be employed.

Although the second embodiment is configured such that the coated cord member 26B is helically wound on the crown portion 16, the invention is not limited to this configuration. An embodiment in which the coated cord member 26B is wound but discontinuous in the width direction may be employed.

In a case in which both the tire case 17 and the coated cord member 26B are heated to get into a melted or softened state, both materials mix with each other well, thereby increasing the bonding strength. The resin material that forms the tire case 17 and the coating resin material 27 that forms the coated cord member 26B are preferably thermoplastic resin materials of the same kind, and more preferably the same thermoplastic material.

The outer circumferential surface 17S of the tire case 17 that has been subjected to the roughening treatment may be subjected to corona treatment, plasma treatment, or the like to activate the outer circumferential surface 17S and to enhance the hydrophilicity, and then the RFL-based adhesive may be applied thereto.

### EXAMPLES

Hereinafter, the present invention is described more specifically by referring to synthetic examples. However, it should be noted that the invention is not limited to these examples.

### Resin Member

### < Preparation of Polyamide-based Thermoplastic Elastomer (TPA) >

Into a 50-liter pressure vessel equipped with a stirrer, a thermometer, a torque meter, a pressure gauge, a nitrogen gas inlet, a pressure regulator, and a polymer outlet, 11.24 kg of 12-aminododecanoic acid, 3.21 kg of ABA type triblock polyether diamine (XTJ-542, manufactured by HUNTSMAN Corporation), and 0.67 kg of adipic acid were added.

Next, after sufficiently replacing the inside of the pressure vessel with nitrogen, the internal pressure of the pressure vessel was adjusted to 0.05 MPa while further supplying nitrogen gas, and the temperature was raised from room temperature to 240°C. Thereafter, a polymerization reaction was carried out at 240°C for 2 hours while maintaining the pressure inside the pressure vessel at 0.05 MPa.

After the polymerization reaction was completed, the flow rate of the nitrogen gas was reduced, the interior of the container was evacuated with a vacuum pump, and polymerization was carried out at 240°C for 5.5 hours, thereby obtaining a polyamide-based thermoplastic elastomer (TPA).

### < Preparation of Resin Piece >

A molded article (resin piece) having a width of 25 mm, a length of 150 mm, and a thickness of 2.5 mm was prepared from the polyamide-based thermoplastic elastomer obtained above by an injection molding machine. The molding conditions and the like were set as a condition under which molding defects such as voids do not occur in the molded article. The molding temperature was set at 240°C and the mold temperature was set at 50°C.

### Rubber Member

As a rubber member, unvulcanized 100% natural rubber (NR), a vulcanizing agent, a vulcanization accelerator, and a variety of rubber agents were kneaded with a BANBURY mixer, and a molded product (rubber piece) having a thickness of 2.5 mm was prepared with a roll mill.

### RFL-basedAdhesive

To 217 g of soft water, 9 g of resorcinol, 12 g of formaldehyde (37% by mass solution, manufactured by Japan Formalin Industry Co., Ltd.), and 28 g of 4% by mass solution of NaOH (0.1 mol/l) were added and mixed. To the resultant, a mixture of 96 g of styrene-butadiene (SBR) latex (JSR 2108, 40% by mass latex manufactured by JSR Corporation) and 93 g of vinyl pyridine (VP) latex (PYRATEX, 41% by mass latex) mixed in advance was further mixed, and stirred the resultant for 1 hour, thereby obtaining a 20% by mass solution of resorcinol formalin latex. This was used as an RFL-based adhesive.

### < Example 1 >

One surface of each of the two resin pieces was surface-treated with a sander (sandpaper) for one minute, and then 10 mg of the RFL-based adhesive was brushed on each of the surface. Next, both side surfaces of one piece of the rubber piece were sandwiched between two resin pieces on which the RFL-based adhesive has been applied so that the coated surface was in contact, and two resin pieces were bonded to both side surfaces of one rubber piece. The resultant was subjected to vulcanization treatment (vulcanization condition: 145°C, 2 MPa, and 21 minutes), thereby preparing a test piece having thickness (µm) and irregularities (µm) of RFL-based adhesive as shown in Table 1.

### < Example 3 >

The test piece was prepared in the same manner as in Example 1, except that conditions for a surface treatment and the amount of an RFL-based adhesive to be applied was changed and the irregularities (µm) of the surface of a resin piece in Example 1 was changed according to Table 1.

### < Comparative Example 1>

A test piece was prepared in the same manner as in Example 1, except that the RFL-based adhesive in Example 1 was not used.

### < Comparative Example 2 >

A test piece was prepared in the same manner as in Example 1 except that a polyolefin-based thermoplastic elastomer (J5710, TPO manufactured by Prime Polymer Co., Ltd.) having the same elastic modulus as that of the polyamide-based thermoplastic elastomer was used as a resin material of a resin piece instead of the polyamide-based thermoplastic elastomer and the surface irregularities (µm) of the resin piece in Example 1 was made 10 µm.

### < Reference Example 1 >

A test piece was prepared in the same manner as in Example 1, except that organic solvent-based adhesive (METALOC, manufactured by Toyo Kagaku Kenkyusho Co., Ltd; two liquid type adhesive ; undercoat agent: PH56, top coat agent: F112) was used instead of the RFL-based adhesive and the irregularities (µm) of the surface of the resin piece was made 10 µm.

### Adhesive Strength

The adhesive strength was determined by a method in accordance with JIS-K6854-3: (1999). The tensile strength at peeling (adhesive strength, kN/m) was determined by using test pieces described in Examples 1 and 3, Comparative Examples 1 and 2, and Reference Example 1 as test samples and pulling the samples at 200 mm per minute.

### Peeling Interface

The peeled sample piece was visually observed and a location where a break or peeling occurred was confirmed. A state in which a rubber piece was broken was evaluated as "rubber cohesive failure", and a state in which a break (peeling) between a rubber piece and a resin piece was evaluated as "peeling at the interface between rubber and resin".

### Dripping

When an RFL-based adhesive was applied, a test piece was visually confirmed and evaluated as to whether or not the RFL-based adhesive was dripping from the edge of the test piece.

### Elongation at Break

Based on the tensile elongation at break test defined in JIS-K7113: (1995), the tensile elongation at break characteristics of each test piece was evaluated by using dumbbell No. 2 test pieces made of the resin materials used in the respective Examples, Comparative Examples, and Reference Example. At this time, the surface of one side of the test piece was set to the same state as the surface irregularities state in each Example, Comparative Example, and Reference Example. The test result is preferable for use as a tire frame when the elongation at break is 50% or more, and is particularly preferable when the elongation at break exceeds 200%.

### Drum Test Result

The tires produced in the Examples and Comparative Examples were adjusted to an internal pressure of 3.0 kg/cm² in a room at 25±2°C and then left to stand for 24 hours. After that, readjustment of air pressure was carried out, the tire was loaded with a load of twice the JIS load in an environment of 25±2°C, and traveling was carried out on a drum with a diameter of about 3 m at a speed of 60 km/h for a maximum of 20,000 km. Then, the distance traveled until the tire failed (occurrence of wild wire or the like) was measured, and evaluation was carried out according to the following evaluation criteria. A longer travel distance indicates a better durability of the tire, and an evaluation of A or B can be considered preferable for practical use.

### Evaluation Criteria

A: Traveled 3,000 km or more, and there were no cracks of 3 mm or more at 3,000 km
B: Traveled 3,000 km or more, and a crack of 3 mm or more occurred at 3,000 km
C: Did not travel as far as 1,000 km

The presence or absence of cracks was evaluated by visually observing the tire surface after traveling.

**Table 1**

| | Example 1 | Example 3 | Comparative Example 1 | Comparative Example 2 | Reference Example 1 |
|---|---|---|---|---|---|
| Test piece | | | | | |
| Resin material | TPA | TPA | TPA | TPO | TPA |
| Rubber | A | A | A | A | A |
| Kind of adhesive | RFL | RFL | None | RFL | METALOC |
| Irregularities on surface of resin piece (µm) | 0.2 | 5 | 5 | 5 | 5 |
| Layer thickness (µm) of adhesive | 10 | 10 | 10 | 10 | 10 |
| Test result | | | | | |
| Adhesive strength (kN/m) | 20 | 20 | 0.8 | 0.8 | 20 |
| Peeling interface | Rubber cohesive failure | Rubber cohesive failure | Peeling at interface between rubber and resin | Peeling at interface between rubber and resin | Rubber cohesive failure |
| Dripping | Occurred | Did not occur | Did not occur | Did not occur | Did not occur |
| Elongation at break/ % | 450 | 400 | 400 | 520 | 400 |
| Drum test result | B | A | C | C | A |

From the above results, it was suggested that the RFL-based adhesive can strongly adhere the rubber piece and the resin piece using the polyamide-based thermoplastic elastomer (TPA), and its adhesive property is comparable to the adhesive (such as METALOC) using organic solvent. Specifically, it was suggested that the water-based RFL-based adhesive using only one liquid has adhesive strength equivalent to that of METALOC of an organic solvent-based adhesive using two liquids. On the other hand, the rubber piece and the resin piece using the polyolefin-based thermoplastic elastomer (TPO) did not firmly adhere to each other even when the RFL-based adhesive was used, and peeling at the interface between the resin piece and the RFL piece occurred.

It was suggested that the water-based RFL-based adhesive can firmly adhere a tire case formed of a polyamide-based thermoplastic resin material and a rubber member formed of a diene-based rubber composition.

## Claims

1. A tire (10) comprising:
a rubber member formed of a rubber composition, the rubber member being a tread (30); and
a ring-shaped tire frame formed of a resin material comprising a polyamide-based thermoplastic resin,
wherein the tire frame is a tire case (17) composed of a pair of bead portions (12) contacting a bead seat (21) and a rim flange (22) of a rim (20), side portions (14) each extending outwardly from the bead portion (12) in the tire radial direction, and a crown portion (16) connecting the outer end in the tire radial direction of one of the side portions (14) and the outer end in the tire radial direction of the other of the side portion (14);
wherein an annular bead core (18) made of a steel cord is embedded in each of the bead portions (12); and
wherein the tire case (17) is obtained by joining together two or more tire case pieces, **characterized in that**:
the rubber composition comprises a diene-based rubber, and the rubber member is adhered to the tire case (17) via a layer formed of a composition comprising a resorcinol-formalin-latex-based adhesive.

2. The tire (10) according to claim 1, wherein the polyamide-based thermoplastic resin is a polyamide-based thermoplastic elastomer.

3. The tire (10) according to claim 2, wherein a mass ratio of a hard segment to a soft segment in the polyamide-based thermoplastic elastomer is from 54/46 to 88/12,
wherein the hard segment is selected from the group consisting of a co-polycondensate of a diamine and a dicarboxylic acid, a polyamide synthesized by using a monomer represented Formula (1), a polyamide synthesized by using a monomer represented Formula (2) or a combination thereof,
Formula (1): H₂N-R¹-COOH
wherein R¹ represents a molecular chain of an aliphatic hydrocarbon having from 2 to 20 carbon atoms, 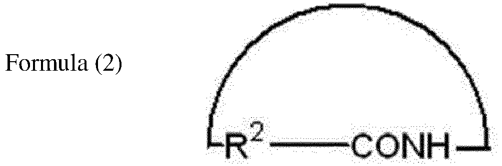
wherein R² represents a molecular chain of an aliphatic hydrocarbon having from 3 to 20 carbon atoms, and
the soft segment is selected from the group consisting of a polyester, a polyether, or a combination thereof.

4. The tire (10) according to any one of claims 1 to 3, wherein a surface roughness of the tire frame is 0.5 µm or more.

5. A method of forming the tire (10) according to claim 1 comprising:
forming a rubber member from a rubber composition comprising a diene-based rubber,
forming a ring-shaped tire frame from a resin material comprising a polyamide-based thermoplastic resin,
subjecting a surface of a resin member comprising a polyamide-based thermoplastic resin to at least one treatment selected from the group consisting of corona discharge treatment, plasma treatment, and degreasing treatment, and
adhering the rubber member to the resin member via a layer formed of a composition comprising a resorcinol-formalin-latex-based adhesive,
wherein the ring-shaped tire frame is the resin member.

## Patentansprüche

1. Reifen (10) umfassend:
ein Kautschukelement, das aus einer Kautschukzusammensetzung gebildet ist, wobei das Kautschukelement eine Lauffläche (30) ist;
und
einen ringförmigen Reifenrahmen, der aus einem Harzmaterial gebildet ist, das ein thermoplastisches Harz auf Polyamidbasis umfasst,
wobei der Reifenrahmen ein Reifenmantel (17) ist, der aus einem Paar von Wulstteilen (12) besteht, die mit einem Wulstsitz (21) und einem Felgenhorn (22) einer Felge (20), Seitenteilen (14), die sich jeder von dem Wulstteil (12) nach außen in reifenradialer Richtung erstrecken, und einem Scheitelteil (16), der das äußere Ende in der reifenradialen Richtung eines der Seitenteile (14) und das äußere Ende in der reifenradialen Richtung des anderen Seitenteils (14) verbindet, in Kontakt sind;
wobei ein ringförmiger Wulstkern (18), der aus einem Stahlcord hergestellt ist, in jedem der Wulstteile (12) eingebettet ist; und
wobei der Reifenmantel (17) durch Zusammenfügen von zwei oder mehr Reifenmantelstücken erhalten wird, **dadurch gekennzeichnet, dass**:
die Kautschukzusammensetzung einen Kautschuk auf Dienbasis umfasst und das Kautschukelement an den Reifenmantel (17) durch eine Schicht befestigt ist, die aus einer Zusammensetzung gebildet ist, die einen Klebstoff auf der Basis von Resorcin-Formalin-Latex umfasst.

2. Reifen (10) nach Anspruch 1, wobei das thermoplastische Harz auf Polyamidbasis ein thermoplastisches Elastomer auf Polyamidbasis ist.

3. Reifen (10) nach Anspruch 2, wobei ein Masseverhältnis eines Hartsegments zu einem Weichsegment in dem thermoplastischen Elastomer auf Polyamidbasis 54/46 bis 88/12 beträgt,
wobei das Hartsegment aus der Gruppe ausgewählt wird bestehend aus einem Copolykondensat eines Diamins und einer Dicarbonsäure, einem Polyamid, das unter Verwendung eines durch die Formel (1) dargestellten Monomers synthetisiert wird, einem Polyamid, das unter Verwendung eines durch die Formel (2) dargestellten Monomers synthetisiert wird, oder einer Kombination davon,
Formel (1): H₂N-R¹COOH,
wobei R¹ eine Molekülkette eines aliphatischen Kohlenwasserstoffs darstellt, der 2 bis 20 Kohlenstoffatome aufweist, 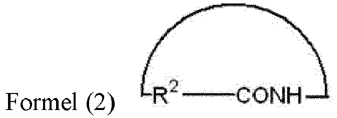
wobei R² eine Molekülkette eines aliphatischen Kohlenwasserstoffs darstellt, der 3 bis 20 Kohlenstoffatome aufweist, und
das Weichsegment aus der Gruppe ausgewählt wird bestehend aus einem Polyester, einem Polyether oder einer Kombination davon.

4. Reifen (10) nach einem der Ansprüche 1 bis 3, wobei eine Oberflächenrauheit des Reifenrahmens 0,5 µm oder mehr beträgt.

5. Verfahren zum Bilden des Reifens (10) nach Anspruch 1, umfassend:
Bilden eines Kautschukelements aus einer Kautschukzusammensetzung umfassend einen Kautschuk auf Dienbasis,
Bilden eines ringförmigen Reifenrahmens aus einem Harzmaterial umfassend ein thermoplastisches Harz auf Polyamidbasis,
Unterwerfen einer Oberfläche eines Harzelements umfassend ein thermoplastisches Harz auf Polyamidbasis mindestens einer Behandlung ausgewählt aus der Gruppe bestehend aus Koronaentladungsbehandlung, Plasmabehandlung und Entfettungsbehandlung und
Befestigen des Kautschukelements an dem Harzelement durch eine Schicht, die aus einer Zusammensetzung gebildet ist, die einen Klebstoff auf der Basis von Resorcin-Formalin-Latex umfasst,
wobei der ringförmige Reifenrahmen das Harzelement ist.

## Revendications

1. Bandage pneumatique (10) comprenant:
un élément de caoutchouc formé d'une composition de caoutchouc, l'élément de caoutchouc étant une bande de roulement (30); et
une carcasse de bandage pneumatique en forme d'anneau formée d'un matériau de résine comprenant une résine thermoplastique à base de polyamide,
la carcasse de bandage pneumatique étant une enveloppe de bandage pneumatique (17) composée d'une paire de portions de talon (12) étant en contact avec un siège de talon (21) et un bord de jante (22) d'une jante (20), des portions latérales (14) s'étendant chacune vers l'extérieur depuis la portion de talon (12) dans le sens radial du bandage pneumatique, et une portion couronne (16) reliant l'extrémité externe dans le sens radial du bandage pneumatique de l'une des portions latérales (14) et l'extrémité externe dans le sens radial du bandage pneumatique de l'autre de la portion latérale (14);
dans lequel un cœur de talon annulaire (18) constitué d'une corde en acier est enchâssé dans chacune des portions de talon (12); et
dans lequel l'enveloppe de bandage pneumatique (17) est obtenue en joignant ensemble deux ou plusieurs pièces d'enveloppe de bandage pneumatique, **caractérisé en ce que**:
la composition de caoutchouc comprend un caoutchouc à base de diène, et que l'élément de caoutchouc adhère à l'enveloppe de bandage pneumatique (17) par l'intermédiaire d'une couche formée d'une composition comprenant un adhésif à base de résorcinol-formaline-latex.

2. Bandage pneumatique (10) selon la revendication 1, dans lequel la résine thermoplastique à base de polyamide est un élastomère thermoplastique à base de polyamide.

3. Bandage pneumatique (10) selon la revendication 2, dans lequel un rapport en masse d'un segment dur à un segment mou dans l'élastomère thermoplastique à base de polyamide est de 54/46 à 88/12,
le segment dur étant sélectionné dans le groupe constitué d'un co-polycondensé d'une diamine et d'un acide dicarboxylique, d'un polyamide synthétisé en utilisant un monomère représenté par la Formule (1), d'un polyamide synthétisé en utilisant un monomère représenté par la Formule (2) ou d'une combinaison de ceux-ci,
Formule (1): H₂N-R¹-COOH,
R¹ représentant une chaîne moléculaire d'un hydrocarbure aliphatique ayant de 2 à 20 atomes de carbone, 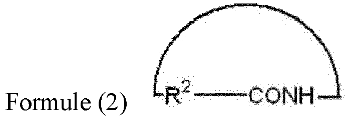
R² représentant une chaîne moléculaire d'un hydrocarbure aliphatique ayant de 3 à 20 atomes de carbone, et
le segment mou étant sélectionné dans le groupe constitué d'un polyester, d'un polyéther, ou d'une combinaison de ceux-ci.

4. Bandage pneumatique (10) selon l'une quelconque des revendications 1 à 3, une rugosité de surface de la carcasse de bandage pneumatique étant de 0,5 µm ou plus.

5. Procédé de formage du bandage pneumatique (10) selon la revendication 1 comprenant:
le formage d'un élément de caoutchouc à partir d'une composition de caoutchouc comprenant un caoutchouc à base de diène,
le formage d'une carcasse de bandage pneumatique en forme d'anneau à partir d'un matériau de résine comprenant une résine thermoplastique à base de polyamide,
la soumission d'une surface d'un élément de résine comprenant une résine thermoplastique à base de polyamide à au moins un traitement sélectionné dans le groupe constitué du traitement par décharge couronne, du traitement plasma, et du traitement de dégraissage, et
l'adhésion de l'élément de caoutchouc à l'élément de résine par l'intermédiaire d'une couche formée d'une composition comprenant un adhésif à base de résorcinol-formaline-latex,
la carcasse de bandage pneumatique en forme d'anneau étant l'élément de résine.
